# EUROPEAN PATENT APPLICATION

(11) **EP 4 489 446 A1**
(43) Date of publication of application: **08.01.2025**
(21) Application number: 23777928.5
(22) Date of filing: 21.03.2023
(51) Int. Cl.: H04W 4/08

(54) **GROUP COMMUNICATION METHOD, APPARATUS AND SYSTEM**

(30) Priority: 31.03.2022 CN 202210346266
(71) Applicant: Huawei Technologies Co., Ltd., Shenzhen, Guangdong 518129 (CN)
(72) Inventor: ZONG, Zaifeng, Shenzhen, Guangdong 518129 (CN); YAO, Qi, Shenzhen, Guangdong 518129 (CN)
(74) Representative: Goddar, Heinz J.
(86) International application number: PCT/CN2023/082837
(87) International publication number: WO 2023/185555

(57) **Abstract**

This application provides a group communication method, an apparatus, and a system. The method may include: A group management network element receives a group communication request message, where the group communication request message includes identification information of a first terminal device and identification information of a second terminal device. The group management network element determines a first session management network element and a second session management network element in response to the group communication request message, and triggers the first session management network element and the second session management network element to establish group communication between the first terminal device and the second terminal device, where the first session management network element serves a first session that has been established by the first terminal device, and the second session management network element serves a second session that has been established by the second terminal device. According to the foregoing solutions, group communication between terminal devices can be established.

## Description

This application claims priority to Chinese Patent Application No. 202210346266.6, filed with the China National Intellectual Property Administration on March 31, 2022 and entitled "GROUP COMMUNICATION METHOD, APPARATUS, AND SYSTEM", which is incorporated herein by reference in its entirety.

### TECHNICAL FIELD

This application relates to the field of communication technologies, and in particular, to a group communication method, an apparatus, and a system.

### BACKGROUND

A 5th generation (5th generation, 5G) virtual network (5G virtual network, 5G VN) (which may also be referred to as 5G local area network (5G local area network, 5G LAN)) service is a service provided by a current 5G network, and is mainly applied to fields such as home communication, enterprise office, factory manufacturing, internet of vehicles, power grid reconstruction, and public security organs. This service can provide private communication of an internet protocol (Internet protocol, IP) type or a non-IP type (for example, an Ethernet type) for two or more terminal devices in a group. For example, a plurality of devices in a factory form a 5G VN group, and different devices in the 5G VN group may send Ethernet data packets to each other by using the 5G VN service. Alternatively, office devices (for example, mobile phones, computers, or laptops) of employees in a department of an enterprise form a 5G VN group, and different office devices in the 5G VN group may send IP data packets to each other by using the 5G VN service.

To implement 5G VN group communication, a method for statically configuring 5G VN group communication is defined in a current 3rd generation partnership project (3rd generation partnership project, 3GPP) technical standard: One 5G VN group corresponds to one data network name (data network name, DNN). Different 5G VN groups are identified by different DNNs. A policy control function (policy control function, PCF) network element delivers a user equipment (user equipment, UE) route selection policy (UE route selection policy, URSP) to a UE in a group, to configure a corresponding DNN on the UE. In addition, 5G VN group subscription data of the UE in the group is stored in a unified data management (unified data management, UDM) network element. The UE in the group initiates a protocol data unit (protocol data unit, PDU) session according to the URSP to establish 5G VN group communication. However, if two UEs have established a PDU session, how to establish group communication between the two UEs is a problem that needs to be considered currently.

### SUMMARY

This application provides a group communication method, an apparatus, and a system, to establish group communication between terminal devices that have established a session.

According to a first aspect, a communication system is provided. The system includes a group management network element, a first session management network element, and a second session management network element. The group management network element is configured to: receive a group communication request message, where the group communication request message includes identification information of a first terminal device and identification information of a second terminal device; determine the first session management network element and the second session management network element in response to the group communication request message; and send a first notification message to the first session management network element, and send a second notification message to the second session management network element, where the first notification message includes the identification information of the first terminal device and identification information of the second session management network element, and the second notification message includes the identification information of the second terminal device and identification information of the first session management network element. The first session management network element serves a first session that has been established by the first terminal device. The second session management network element serves a second session that has been established by the second terminal device. The first session management network element is configured to: receive the first notification message; and send a request message to the second session management network element based on the identification information of the second session management network element, where the request message includes tunnel information of a first user plane network element, the identification information of the first terminal device, and the identification information of the second terminal device, and the first user plane network element serves the first session. The second session management network element is configured to: receive the second notification message from the group management network element and the request message from the first session management network element; configure a first forwarding rule for a second user plane network element based on the tunnel information of the first user plane network element and the identification information of the first terminal device, where the first forwarding rule is used to send a data packet whose destination address points to the first terminal device to the first user plane network element; and send a response message to the first session management network element, where the response message includes tunnel information of the second user plane network element, and the second user plane network element serves the second session. The first session management network element is further configured to: receive the response message from the second session management network element; and configure a second forwarding rule for the first user plane network element based on the tunnel information of the second user plane network element and the identification information of the second terminal device, where the second forwarding rule is used to send a data packet whose destination address points to the second terminal device to the second user plane network element.

Based on the foregoing communication system, after receiving the group communication request message between the first terminal device and the second terminal device, the group management network element determines the first session management network element serving for the first session that has been established by the first terminal device, determines the second session management network element serving for the second session that has been established by the second terminal device, and then sends notification messages to the first session management network element and the second session management network element respectively, to trigger the first session management network element and the second session management network element to establish group communication between the first terminal device and the second terminal device. The first session management network element and the second session management network element establish, based on the notification messages from the group management network element, a tunnel between the first user plane network element serving the first terminal device and the second user plane network element serving the second terminal device, and configure forwarding rules, so that the first terminal device and the second terminal device may perform group communication via the tunnel.

Therefore, according to the foregoing solution, when the first terminal device and the second terminal device have established a session, if group communication between the first terminal device and the second terminal device needs to be established, session management network elements serving the first terminal device and the second terminal device may be directly triggered to establish group communication between the first terminal device and the second terminal device, without re-establishing a group session.

With reference to the first aspect, in some implementations of the first aspect, the group communication request message further includes indication information, and the indication information indicates to establish group communication between the first terminal device and the second terminal device.

Based on the foregoing solution, the group communication request message may explicitly indicate the group management network element to establish group communication between the first terminal device and the second terminal device, so that the group management network element can trigger, based on the indication information, the first session management network element and the second session management network element to establish group communication between the first terminal device and the second terminal device.

In an implementation, the indication information may be identification information of a group, where the first terminal device and the second terminal device belong to the group.

With reference to the first aspect, in some implementations of the first aspect, that the group management network element is configured to determine the first session management network element and the second session management network element in response to the group communication request message includes: The group management network element is configured to: obtain, based on the identification information of the first terminal device, a first context associated with the first session, and obtain, based on the identification information of the second terminal device, a second context associated with the second session, where the first context includes the identification information of the first session management network element, and the second context includes the identification information of the second session management network element.

Based on the foregoing solution, the group management network element may determine, from the first context associated with the first session, the first session management network element serving for the first session of the first terminal device, and determine, from the second context associated with the second session, the second session management network element serving for the second session of the second terminal device, so that the group management network element can trigger the first session management network element and the second session management network element to establish group communication between the first terminal device and the second terminal device.

It should be understood that before the solution of this application, the group management network element prestores the first context and the second context. For example, the group management network element stores the first context in a process of establishing the first session (or after establishment of the first session is completed), and the group management network element stores the second context in a process of establishing the second session (or after establishment of the second session is completed). The first context includes the identification information of the first terminal device, the identification information of the first session management network element, and identification information of the first session. The second context includes the identification information of the second terminal device, the identification information of the second session management network element, and identification information of the second session.

With reference to the first aspect, in some implementations of the first aspect, the first session management network element is further configured to send a first registration message to the group management network element, where the first registration message includes the identification information of the first terminal device, the identification information of the first session management network element, and the identification information of the first session. The second session management network element is further configured to send a second registration message to the group management network element, where the second registration message includes the identification information of the second terminal device, the identification information of the second session management network element, and the identification information of the second session. The group management network element is further configured to: receive the first registration message from the first session management network element, and receive the second registration message from the second session management network element.

Based on the foregoing solution, the first session management network element may register the identification information of the first terminal device, the identification information of the first session management network element, and the identification information of the first session with the group management network element. The second session management network element may register the identification information of the second terminal device, the identification information of the second session management network element, and the identification information of the second session with the group management network element. According to this solution, when group communication between the first terminal device and the second terminal device needs to be established, the group management network element may determine the first session management network element and the second session management network element based on the information, to trigger the first session management network element and the second session management network element to establish group communication between the first terminal device and the second terminal device.

With reference to the first aspect, in some implementations of the first aspect, that the group management network element is configured to receive a group communication request message includes: The group management network element is configured to receive the group communication request message from a network exposure function network element.

According to a second aspect, a communication system is provided. The communication system includes a group management network element, a first session management network element, and a second session management network element. The group management network element is configured to: receive a group communication request message, where the group communication request message includes identification information of a first terminal device and identification information of a second terminal device; determine the first session management network element and the second session management network element in response to the group communication request message; and send a first notification message to the first session management network element, where the first notification message includes the identification information of the first terminal device, the identification information of the second terminal device, and identification information of the second session management network element. The first session management network element serves a first session that has been established by the first terminal device. The second session management network element serves a second session that has been established by the second terminal device. The first session management network element is configured to: receive the first notification message; and send a request message to the second session management network element based on the identification information of the second session management network element, where the request message includes tunnel information of a first user plane network element, the identification information of the first terminal device, and the identification information of the second terminal device, and the first user plane network element serves the first session. The second session management network element is configured to: receive the request message from the first session management network element; configure a first forwarding rule for a second user plane network element based on the tunnel information of the first user plane network element and the identification information of the first terminal device, where the first forwarding rule is used to send a data packet whose destination address points to the first terminal device to the first user plane network element; and send a response message to the first session management network element, where the response message includes tunnel information of the second user plane network element, and the second user plane network element serves the second session. The first session management network element is further configured to: receive the response message from the second session management network element; and configure a second forwarding rule for the first user plane network element based on the tunnel information of the second user plane network element and the identification information of the second terminal device, where the second forwarding rule is used to send a data packet whose destination address points to the second terminal device to the first user plane network element.

Based on the foregoing communication system, after receiving the group communication request message between the first terminal device and the second terminal device, the group management network element determines the first session management network element serving for the first session that has been established by the first terminal device, determines the second session management network element serving for the second session that has been established by the second terminal device, and then sends the first notification message to the first session management network element, to trigger the first session management network element to establish group communication between the first terminal device and the second terminal device. The first session management network element establishes, based on the first notification message from the group management network element, a tunnel between the first user plane network element serving the first terminal device and the second user plane network element serving the second terminal device, and configure a forwarding rule, so that the first terminal device and the second terminal device may perform group communication via the tunnel.

Therefore, according to the foregoing solution, when the first terminal device and the second terminal device have established a session, if group communication between the first terminal device and the second terminal device needs to be established, session management network elements serving the first terminal device and the second terminal device may be directly triggered to establish group communication between the first terminal device and the second terminal device, without re-establishing a group session.

With reference to the second aspect, in some implementations of the second aspect, the group communication request message further includes indication information, and the indication information indicates to establish group communication between the first terminal device and the second terminal device.

With reference to the second aspect, in some implementations of the second aspect, that the group management network element is configured to determine the first session management network element and the second session management network element in response to the group communication request message includes: The group management network element is configured to: obtain, based on the identification information of the first terminal device, a first context associated with the first session, and obtain, based on the identification information of the second terminal device, a second context associated with the second session, where the first context includes identification information of the first session management network element, and the second context includes the identification information of the second session management network element.

With reference to the second aspect, in some implementations of the second aspect, the first session management network element is further configured to send a first registration message to the group management network element, where the first registration message includes the identification information of the first terminal device, the identification information of the first session management network element, and identification information of the first session. The second session management network element is further configured to send a second registration message to the group management network element, where the second registration message includes the identification information of the second terminal device, the identification information of the second session management network element, and identification information of the second session. The group management network element is further configured to: receive the first registration message from the first session management network element, and receive the second registration message from the second session management network element.

With reference to the second aspect, in some implementations of the second aspect, that the group management network element is configured to receive a group communication request message includes: The group management network element is configured to receive the group communication request message from a network exposure function network element.

According to a third aspect, a communication system is provided. The communication system includes a group management network element and a first session management network element. The group management network element is configured to: receive a group communication request message, where the group communication request message includes identification information of a first terminal device and identification information of a second terminal device; determine the first session management network element in response to the group communication request message; and send a fourth notification message to the first session management network element, where the fourth notification message includes the identification information of the first terminal device and the identification information of the second terminal device. The first session management network element serves a first session that has been established by the first terminal device and a second session that has been established by the second terminal device. The first session management network element is configured to: receive the fourth notification message; determine a first user plane network element based on the identification information of the first terminal device, and determine a second user plane network element based on the identification information of the second terminal device; and when the first user plane network element is the same as the second user plane network element, configure a third forwarding rule for the first user plane network element, where the third forwarding rule is used to send a data packet whose destination address points to the first terminal device to an access network device of the first terminal device, and send a data packet whose destination address points to the second terminal device to an access network device corresponding to the second terminal device; or when the first user plane network element is different from the second user plane network element, the first session management network element configures a fourth forwarding rule for the first user plane network element, and configures a fifth forwarding rule for the second user plane network element, where the fourth forwarding rule is used to send a data packet whose destination address points to the second terminal device to the second user plane network element, and the fifth forwarding rule is used to send a data packet whose destination address points to the first terminal device to the first user plane network element. The first user plane network element serves the first session. The second user plane network element serves the second session.

Based on the foregoing communication system, after receiving the group communication request message between the first terminal device and the second terminal device, the group management network element determines the first session management network element serving for the first session that has been established by the first terminal device and serving for the second session that has been established by the second terminal device, and then sends the fourth notification message to the first session management network element, to trigger the first session management network element to establish group communication between the first terminal device and the second terminal device. The first session management network element determines, based on the fourth notification message from the group management network element, whether the first user plane network element is the same as the second user plane network element, and then establishes the group communication between the first terminal device and the second terminal device based on a determining result.

Therefore, according to the foregoing solution, when the first terminal device and the second terminal device have established a session, if group communication between the first terminal device and the second terminal device needs to be established, the first session management network element serving the first terminal device and the second terminal device may be directly triggered to establish group communication between the first terminal device and the second terminal device, without re-establishing a group session.

With reference to the third aspect, in some implementations of the third aspect, the group communication request message further includes indication information, and the indication information indicates to establish group communication between the first terminal device and the second terminal device.

With reference to the third aspect, in some implementations of the third aspect, that the group management network element is configured to determine the first session management network element in response to the group communication request message includes: The group management network element is configured to: obtain, based on the identification information of the first terminal device, a first context associated with the first session, and obtain, based on the identification information of the second terminal device, a second context associated with the second session, where the first context and the second context each include identification information of the first session management network element.

With reference to the third aspect, in some implementations of the third aspect, the first session management network element is further configured to: send a first registration message to the group management network element, and send a second registration message to the group management network element, where the first registration message includes the identification information of the first terminal device, the identification information of the first session management network element, and identification information of the first session, and the second registration message includes the identification information of the second terminal device, the identification information of the first session management network element, and identification information of the second session. The group management network element is further configured to receive the first registration message and the second registration message from the first session management network element.

With reference to the third aspect, in some implementations of the third aspect, that the group management network element is configured to receive a group communication request message includes: The group management network element is configured to receive the group communication request message from a network exposure function network element.

According to a fourth aspect, a group communication method is provided. The method may be performed by a group management network element, or may be performed by a component (for example, a chip or a circuit) of a group management network element. This is not limited. For ease of description, the following uses an example in which the method is performed by the group management network element for description.

The group communication method includes: The group management network element receives a group communication request message, where the group communication request message includes identification information of a first terminal device and identification information of a second terminal device. The group management network element determines a first session management network element and a second session management network element in response to the group communication request message, and triggers the first session management network element and the second session management network element to establish group communication between the first terminal device and the second terminal device, where the first session management network element serves a first session that has been established by the first terminal device, and the second session management network element serves a second session that has been established by the second terminal device.

Based on the foregoing solution, after receiving the group communication request message between the first terminal device and the second terminal device, the group management network element determines the first session management network element serving for the first session that has been established by the first terminal device, determines the second session management network element serving for the second session that has been established by the second terminal device, and then sends notification messages to the first session management network element and the second session management network element respectively, to trigger the first session management network element and the second session management network element to establish group communication between the first terminal device and the second terminal device. According to the foregoing solution, when the first terminal device and the second terminal device have established a session, if group communication between the first terminal device and the second terminal device needs to be established, session management network elements serving the first terminal device and the second terminal device may be directly triggered to establish group communication between the first terminal device and the second terminal device, without re-establishing a group session.

With reference to the fourth aspect, in some implementations of the fourth aspect, the group communication request message further includes indication information, and the indication information indicates to establish group communication between the first terminal device and the second terminal device.

Based on the foregoing solution, the group communication request message may explicitly indicate the group management network element to establish group communication between the first terminal device and the second terminal device, so that the group management network element can trigger, based on the indication information, the first session management network element and the second session management network element to establish group communication between the first terminal device and the second terminal device.

With reference to the fourth aspect, in some implementations of the fourth aspect, that the group management network element determines the first session management network element and the second session management network element includes: The group management network element obtains, based on the identification information of the first terminal device, a first context associated with the first session, and obtains, based on the identification information of the second terminal device, a second context associated with the second session, where the first context includes identification information of the first session management network element, and the second context includes identification information of the second session management network element.

Based on the foregoing solution, the group management network element may determine, from the first context associated with the first session, the first session management network element serving for the first session of the first terminal device, and determine, from the second context associated with the second session, the second session management network element serving for the second session of the second terminal device, so that the group management network element can trigger the first session management network element and the second session management network element to establish group communication between the first terminal device and the second terminal device.

It should be understood that before the solution of this application, the group management network element prestores the first context and the second context. For example, the group management network element stores the first context in a process of establishing the first session (or after establishment of the first session is completed), and the group management network element stores the second context in a process of establishing the second session (or after establishment of the second session is completed). The first context includes the identification information of the first terminal device, the identification information of the first session management network element, and identification information of the first session. The second context includes the identification information of the second terminal device, the identification information of the second session management network element, and identification information of the second session.

With reference to the fourth aspect, in some implementations of the fourth aspect, triggering the first session management network element and the second session management network element to establish group communication between the first terminal device and the second terminal device includes: The group management network element sends a first notification message to the first session management network element, and sends a second notification message to the second session management network element, where the first notification message includes the identification information of the first terminal device and the identification information of the second session management network element, and the second notification message includes the identification information of the second terminal device and the identification information of the first session management network element.

Based on the foregoing solution, the group management network element may send the notification messages to the first session management network element and the second session management network element respectively. In a subsequent procedure, either of the first session management network element and the second session management network element may trigger establishment of group communication between the first terminal device and the second terminal device.

With reference to the fourth aspect, in some implementations of the fourth aspect, triggering the first session management network element and the second session management network element to establish group communication between the first terminal device and the second terminal device includes: The group management network element sends a third notification message to the first session management network element, where the third notification message includes the identification information of the first terminal device, the identification information of the second terminal device, and the identification information of the second session management network element.

Based on the foregoing solution, the group management network element may send a notification message to either of the first session management network element and the second session management network element, for example, send the third notification message to the first session management network element, so that the first session management network element triggers establishment of group communication between the first terminal device and the second terminal device.

With reference to the fourth aspect, in some implementations of the fourth aspect, the method further includes: The group management network element receives a first registration message from the first session management network element, where the first registration message includes the identification information of the first terminal device, the identification information of the first session management network element, and the identification information of the first session. The group management network element receives a second registration message from the second session management network element, where the second registration message includes the identification information of the second terminal device, the identification information of the second session management network element, and the identification information of the second session.

Based on the foregoing solution, the first session management network element may register the identification information of the first terminal device, the identification information of the first session management network element, and the identification information of the first session with the group management network element. According to this solution, when group communication between the first terminal device and the second terminal device needs to be established, the group management network element may determine the first session management network element based on the information, to trigger the first session management network element to establish group communication between the first terminal device and the second terminal device.

With reference to the fourth aspect, in some implementations of the fourth aspect, that the group management network element receives a group communication request message includes: The group management network element receives the group communication request message from a network exposure function network element.

According to a fifth aspect, a group communication method is provided. The method may be performed by a group management network element, or may be performed by a component (for example, a chip or a circuit) of a group management network element. This is not limited. For ease of description, the following uses an example in which the method is performed by the group management network element for description.

The group communication method includes: The group management network element receives a group communication request message, where the group communication request message includes identification information of a first terminal device and identification information of a second terminal device. The group management network element determines a first session management network element in response to the group communication request message, and triggers the first session management network element to establish group communication between the first terminal device and the second terminal device, where the first session management network element serves a first session that has been established by the first terminal device and a second session that has been established by the second terminal device.

Based on the foregoing communication system, after receiving the group communication request message between the first terminal device and the second terminal device, the group management network element determines the first session management network element serving for the first session that has been established by the first terminal device and serving for the second session that has been established by the second terminal device, and then triggers the first session management network element to establish group communication between the first terminal device and the second terminal device.

Therefore, according to the foregoing solution, when the first terminal device and the second terminal device have established a session, if group communication between the first terminal device and the second terminal device needs to be established, the first session management network element serving the first terminal device and the second terminal device may be directly triggered to establish group communication between the first terminal device and the second terminal device, without re-establishing a group session.

With reference to the fifth aspect, in some implementations of the fifth aspect, the group communication request message further includes indication information, and the indication information indicates to establish group communication between the first terminal device and the second terminal device.

With reference to the fifth aspect, in some implementations of the fifth aspect, that the group management network element determines the first session management network element includes: The group management network element obtains, based on the identification information of the first terminal device, a first context associated with the first session, and obtains, based on the identification information of the second terminal device, a second context associated with the second session, where the first context and the second context each include identification information of the first session management network element.

With reference to the fifth aspect, in some implementations of the fifth aspect, triggering the first session management network element to establish group communication between the first terminal device and the second terminal device includes: The group management network element sends a fourth notification message to the first session management network element, where the fourth notification message includes the identification information of the first terminal device and the identification information of the second terminal device.

With reference to the fifth aspect, in some implementations of the fifth aspect, the method further includes: The group management network element receives a first registration message from the first session management network element, where the first registration message includes the identification information of the first terminal device, the identification information of the first session management network element, and identification information of the first session. The group management network element receives a second registration message from the first session management network element, where the second registration message includes the identification information of the second terminal device, the identification information of the first session management network element, and identification information of the second session.

With reference to the fifth aspect, in some implementations of the fifth aspect, that the group management network element receives a group communication request message includes: The group management network element receives the group communication request message from a network exposure function network element.

According to a sixth aspect, a group communication method is provided. The method may be performed by a first terminal device, or may be performed by a component (for example, a chip or a circuit) of a first terminal device. This is not limited. For ease of description, the following uses an example in which the method is performed by the first terminal device for description.

The group communication method includes: The first terminal device receives identification information of a group, where the first terminal device belongs to the group. The first terminal device sends a request message to a first session management network element, where the request message includes the identification information of the group, the request message is used to request to trigger establishment of group communication between the first terminal device and another group member in the group, and the first session management network element serves a first session that has been established by the first terminal device.

Based on the foregoing solution, after receiving the identification information of the group, the first terminal device may determine that the first terminal device belongs to the group, and then the first terminal device may request the first session management network element serving the first terminal device to establish group communication between the first terminal device and the another group member in the group.

Therefore, according to the foregoing solution, when the first terminal device has established a session, the first terminal device may trigger the first session management network element to establish group communication between the first terminal device and the another group member in the group, without re-establishing a group session.

With reference to the sixth aspect, in some implementations of the sixth aspect, the request message is a session modification request message, and the session modification request message includes identification information of the first session.

With reference to the sixth aspect, in some implementations of the sixth aspect, the first terminal device receives identification information of a second terminal device, including: The first terminal device receives the identification information of the second terminal device from a data management network element or an application function network element.

According to a seventh aspect, a group communication method is provided. The method may be performed by a first terminal device, or may be performed by a component (for example, a chip or a circuit) of a first terminal device. This is not limited. For ease of description, the following uses an example in which the method is performed by the first terminal device for description.

The group communication method includes: The first terminal device receives identification information of a second terminal device. The first terminal device sends a request message to a first session management network element, where the request message includes the identification information of the second terminal device, the request message is used to request to trigger establishment of group communication between the first terminal device and the second terminal device, and the first session management network element serves a first session that has been established by the first terminal device.

Based on the foregoing solution, after receiving identification information of another terminal device (that is, the second terminal device), the first terminal device determines that the first terminal device belongs to a same group as the second terminal device, and then the first terminal device may request the first session management network element serving the first terminal device to establish group communication between the first terminal device and the second terminal device.

Therefore, according to the foregoing solution, when the first terminal device has established a session, the first terminal device may trigger the first session management network element to establish group communication between the first terminal device and the second terminal device in the group, without re-establishing a group session.

With reference to the seventh aspect, in some implementations of the seventh aspect, the request message is a session modification request message, and the session modification request message includes identification information of the first session.

With reference to the seventh aspect, in some implementations of the seventh aspect, that the first terminal device receives identification information of a second terminal device includes: The first terminal device receives the identification information of the second terminal device from a data management network element or an application function network element.

According to an eighth aspect, a group communication method is provided. The method may be performed by a first session management network element, or may be performed by a component (for example, a chip or a circuit) of a first session management network element. This is not limited. For ease of description, the following uses an example in which the method is performed by the first session management network element for description.

The group communication method includes: The first session management network element receives a fifth notification message from a group management network element, where the fifth notification message includes identification information of a first terminal device and identification information of a second terminal device, and the first session management network element serves a first session that has been established by the first terminal device. The first session management network element determines whether the second terminal device is served by the first session management network element, and establishes group communication between the first terminal device and the second terminal device based on a determining result.

With reference to the eighth aspect, in some implementations of the eighth aspect, establishing group communication between the first terminal device and the second terminal device based on the determining result includes: When the first session management network element determines that the second terminal device is not served by the first session management network element, the first session management network element obtains identification information of a second session management network element based on the identification information of the second terminal device, where the second session management network element is a network element serving for a session of the second terminal device.

With reference to the eighth aspect, in some implementations of the eighth aspect, the method further includes: The first session management network element sends a tunnel establishment request message to the second session management network element based on the identification information of the second session management network element, where the tunnel establishment request message includes tunnel information of a first user plane network element, the identification information of the first terminal device, and the identification information of the second terminal device, and the first user plane network element serves the first session. The first session management network element receives a tunnel establishment response message from the second session management network element, where the tunnel establishment response message includes tunnel information of a second user plane network element, and the second user plane network element serves a second session. The first session management network element configures a first forwarding rule for the first user plane network element based on the tunnel information of the second user plane network element and the identification information of the second terminal device, where the first forwarding rule is used to send a data packet whose destination address points to the second terminal device to the second user plane network element.

With reference to the eighth aspect, in some implementations of the eighth aspect, establishing group communication between the first terminal device and the second terminal device based on the determining result includes: When the first session management network element determines that the second terminal device is served by the first session management network element, the first session management network element configures a second forwarding rule for the first user plane network element, where the second forwarding rule is used to locally exchange communication data between the first terminal device and the second terminal device, and the first user plane network element serves a session that has been established by the first terminal device and the second terminal device.

With reference to the eighth aspect, in some implementations of the eighth aspect, 5. The method according to any one of claims 1 to 3, where establishing group communication between the first terminal device and the second terminal device based on the determining result includes: When the first session management network element determines that the second terminal device is served by the first session management network element, the first session management network element establishes a tunnel between the first user plane network element and the second user plane network element, where the first user plane network element serves a session that has been established by the first terminal device, and the second user plane network element serves a session that has been established by the second terminal device. The first session management network element configures a third forwarding rule for the first user plane network element, and configures a fourth forwarding rule for the second user plane network element, where the third forwarding rule is used to send a data packet whose destination address points to the second terminal device to the second user plane network element, and the fourth forwarding rule is used to send a data packet whose destination address points to the first terminal device to the first user plane network element.

According to a ninth aspect, a communication apparatus is provided. The communication apparatus includes: a transceiver module, configured to receive a group communication request message, where the group communication request message includes identification information of a first terminal device and identification information of a second terminal device; and a processing module, configured to: determine a first session management network element and a second session management network element in response to the group communication request message, and trigger the first session management network element and the second session management network element to establish group communication between the first terminal device and the second terminal device, where the first session management network element serves a first session that has been established by the first terminal device, and the second session management network element serves a second session that has been established by the second terminal device.

With reference to the ninth aspect, in some implementations of the ninth aspect, the group communication request message further includes indication information, and the indication information indicates to establish group communication between the first terminal device and the second terminal device.

With reference to the ninth aspect, in some implementations of the ninth aspect, the processing module is specifically configured to: obtain, based on the identification information of the first terminal device, a first context associated with the first session, and obtain, based on the identification information of the second terminal device, a second context associated with the second session, where the first context includes identification information of the first session management network element, and the second context includes identification information of the second session management network element.

With reference to the ninth aspect, in some implementations of the ninth aspect, the transceiver module is specifically configured to: send a first notification message to the first session management network element, and send a second notification message to the second session management network element, where the first notification message includes the identification information of the first terminal device and the identification information of the second session management network element, and the second notification message includes the identification information of the second terminal device and the identification information of the first session management network element.

With reference to the ninth aspect, in some implementations of the ninth aspect, the transceiver module is specifically configured to send a third notification message to the first session management network element, where the third notification message includes the identification information of the first terminal device, the identification information of the second terminal device, and the identification information of the second session management network element.

With reference to the ninth aspect, in some implementations of the ninth aspect, the transceiver module is further configured to: receive a first registration message from the first session management network element, where the first registration message includes the identification information of the first terminal device, the identification information of the first session management network element, and identification information of the first session; and receive a second registration message from the second session management network element, where the second registration message includes the identification information of the second terminal device, the identification information of the second session management network element, and identification information of the second session.

With reference to the ninth aspect, in some implementations of the ninth aspect, the transceiver module is specifically configured to receive the group communication request message from a network exposure function network element.

According to a tenth aspect, a communication apparatus is provided. The communication apparatus includes: a transceiver module, configured to receive a group communication request message, where the group communication request message includes identification information of a first terminal device and identification information of a second terminal device; and a processing module, configured to: determine a first session management network element in response to the group communication request message, and trigger the first session management network element to establish group communication between the first terminal device and the second terminal device, where the first session management network element serves a first session that has been established by the first terminal device and a second session that has been established by the second terminal device.

With reference to the tenth aspect, in some implementations of the tenth aspect, the group communication request message further includes indication information, and the indication information indicates to establish group communication between the first terminal device and the second terminal device.

With reference to the tenth aspect, in some implementations of the tenth aspect, the processing module is specifically configured to: obtain, based on the identification information of the first terminal device, a first context associated with the first session, and obtain, based on the identification information of the second terminal device, a second context associated with the second session, where the first context and the second context each include identification information of the first session management network element.

With reference to the tenth aspect, in some implementations of the tenth aspect, the transceiver module is specifically configured to send a fourth notification message to the first session management network element, where the fourth notification message includes the identification information of the first terminal device and the identification information of the second terminal device.

With reference to the tenth aspect, in some implementations of the tenth aspect, the transceiver module is further configured to: receive a first registration message from the first session management network element, where the first registration message includes the identification information of the first terminal device, the identification information of the first session management network element, and identification information of the first session; and receive a second registration message from the first session management network element, where the second registration message includes the identification information of the second terminal device, the identification information of the first session management network element, and identification information of the second session.

With reference to the tenth aspect, in some implementations of the tenth aspect, the processing module is specifically configured to receive the group communication request message from a network exposure function network element.

According to an eleventh aspect, a communication apparatus is provided. The communication apparatus includes a transceiver module, configured to: receive identification information of a group, where a first terminal device belongs to the group; and send a request message to a first session management network element, where the request message includes the identification information of the group, the request message is used to request to trigger establishment of group communication between the first terminal device and another group member in the group, and the first session management network element serves a first session that has been established by the first terminal device.

With reference to the eleventh aspect, in some implementations of the eleventh aspect, the request message is a session modification request message, and the session modification request message includes identification information of the first session.

With reference to the eleventh aspect, in some implementations of the eleventh aspect, a processing module is specifically configured to receive identification information of a second terminal device from a data management network element or an application function network element.

According to a twelfth aspect, a communication apparatus is provided. The communication apparatus includes a transceiver module, configured to: receive identification information of a second terminal device; and send a request message to a first session management network element, where the request message includes the identification information of the second terminal device, the request message is used to request to trigger establishment of group communication between a first terminal device and the second terminal device, and the first session management network element serves a first session that has been established by the first terminal device.

With reference to the twelfth aspect, in some implementations of the twelfth aspect, the request message is a session modification request message, and the session modification request message includes identification information of the first session.

With reference to the twelfth aspect, in some implementations of the twelfth aspect, a processing module is specifically configured to receive the identification information of the second terminal device from a data management network element or an application function network element.

According to a thirteenth aspect, a communication apparatus is provided. The communication apparatus includes: a transceiver module, configured to receive a fifth notification message from a group management network element, where the fifth notification message includes identification information of a first terminal device and identification information of a second terminal device, and a first session management network element serves a first session that has been established by the first terminal device; and a processing module, configured to: determine whether the second terminal device is served by the first session management network element, and establish group communication between the first terminal device and the second terminal device based on a determining result.

With reference to the thirteenth aspect, in some implementations of the thirteenth aspect, the processing module is specifically configured to: when determining that the second terminal device is not served by the first session management network element, obtain, by the first session management network element, identification information of a second session management network element based on the identification information of the second terminal device, where the second session management network element is a network element serving for a session of the second terminal device.

With reference to the thirteenth aspect, in some implementations of the thirteenth aspect, the processing module is further configured to send a tunnel establishment request message to the second session management network element based on the identification information of the second session management network element, where the tunnel establishment request message includes tunnel information of a first user plane network element, the identification information of the first terminal device, and the identification information of the second terminal device, and the first user plane network element serves the first session. The transceiver module is further configured to receive a tunnel establishment response message from the second session management network element, where the tunnel establishment response message includes tunnel information of a second user plane network element, and the second user plane network element serves a second session. The processing module is further configured to configure a first forwarding rule for the first user plane network element based on the tunnel information of the second user plane network element and the identification information of the second terminal device, where the first forwarding rule is used to send a data packet whose destination address points to the second terminal device to the second user plane network element.

With reference to the thirteenth aspect, in some implementations of the thirteenth aspect, the processing module is specifically configured to: when determining that the second terminal device is served by the first session management network element, configure, by the first session management network element, a second forwarding rule for the first user plane network element, where the second forwarding rule is used to locally exchange communication data between the first terminal device and the second terminal device, and the first user plane network element serves a session that has been established by the first terminal device and the second terminal device.

With reference to the thirteenth aspect, in some implementations of the thirteenth aspect, the processing module is specifically configured to: when determining that the second terminal device is served by the first session management network element, establish a tunnel between the first user plane network element and the second user plane network element, where the first user plane network element serves a session that has been established by the first terminal device, and the second user plane network element serves a session that has been established by the second terminal device; and configure a third forwarding rule for the first user plane network element, and configure a fourth forwarding rule for the second user plane network element, where the third forwarding rule is used to send a data packet whose destination address points to the second terminal device to the second user plane network element, and the fourth forwarding rule is used to send a data packet whose destination address points to the first terminal device to the second user plane network element.

According to a fourteenth aspect, a communication apparatus is provided. The apparatus is configured to perform the methods provided in the fourth aspect to the eighth aspect. Specifically, the apparatus may include a unit and/or a module configured to perform the methods provided in the fourth aspect to the eighth aspect, for example, a processing module and/or a transceiver module (which may also be referred to as a communication module). In an implementation, the apparatus is a network device. For example, the apparatus is a group management network element or a session management network element. When the apparatus is the network device, the communication module may be a transceiver or an input/output interface, and the processing module may be a processor.

In another implementation, the apparatus is a chip, a chip system, or a circuit used in the network device. When the apparatus is a chip, a chip system, or a circuit used in a communication device, the communication module may be an input/output interface, an interface circuit, an output circuit, an input circuit, a pin, a related circuit, or the like on the chip, the chip system, or the circuit; and the processing module may be a processor, a processing circuit, a logic circuit, or the like.

In a possible case, the apparatus is the group management network element, or a chip, a chip system, or a circuit in the group management network element. In this case, the apparatus may include a unit and/or a module configured to perform the method provided in the fourth aspect or the fifth aspect, for example, a processing module and/or a transceiver module (which may also be referred to as a communication unit).

In another possible case, the apparatus is the session management network element, or a chip, a chip system, or a circuit in the session management network element. In this case, the apparatus may include a unit and/or a module configured to perform the method provided in the fifth aspect, for example, a processing module and/or a transceiver module.

In another implementation, the apparatus is a chip, a chip system, or a circuit used in a terminal device. In a possible case, the apparatus is the terminal device, or the chip, the chip system, or the circuit in the terminal device. In this case, the apparatus includes a unit and/or a module configured to perform the method provided in the sixth aspect or the seventh aspect, for example, a processing module and/or a transceiver module.

According to a fifteenth aspect, a communication apparatus is provided. The apparatus includes: a memory, configured to store a program; and a processor, configured to execute the program stored in the memory. When the program stored in the memory is executed, the processor is configured to perform the methods provided in the fourth aspect to the eighth aspect.

According to a sixteenth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the information. After the foregoing information is output by the processor, other processing may further need to be performed on the information and then the information arrives at the transceiver. Similarly, when the processor receives the foregoing input information, the transceiver obtains/receives the foregoing information, and inputs the information into the processor. Further, after the transceiver receives the foregoing information, other processing may need to be performed on the information and then the information is input into the processor.

Based on the foregoing principle, for example, receiving a request message mentioned in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventeenth aspect, a computer-readable storage medium is provided. The computer-readable medium stores program code to be executed by a device. The program code is used to perform the methods provided in the fourth aspect to the eighth aspect.

According to an eighteenth aspect, a computer program product including instructions is provided. When the computer program product runs on a computer, the computer is enabled to perform the methods provided in the fourth aspect to the eighth aspect.

According to a nineteenth aspect, a chip is provided. The chip includes a processor and a communication interface. The processor reads, via the communication interface, instructions stored in a memory, to perform the methods provided in the fourth aspect to the eighth aspect.

Optionally, in an implementation, the chip may further include the memory. The memory stores the instructions. The processor is configured to execute the instructions stored in the memory. When the instructions are executed, the processor is configured to perform the methods provided in the fourth aspect to the eighth aspect.

### BRIEF DESCRIPTION OF DRAWINGS

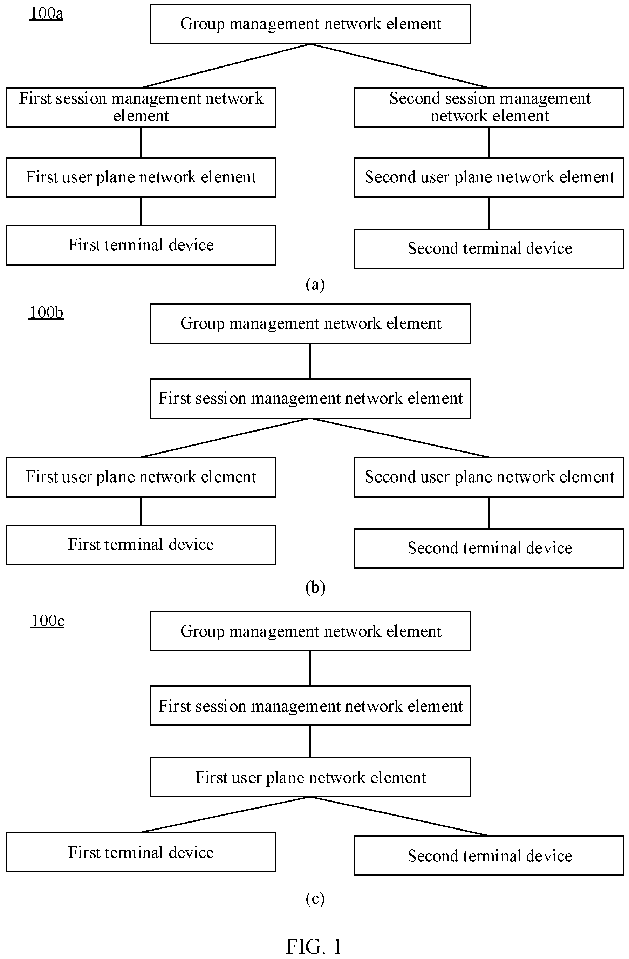

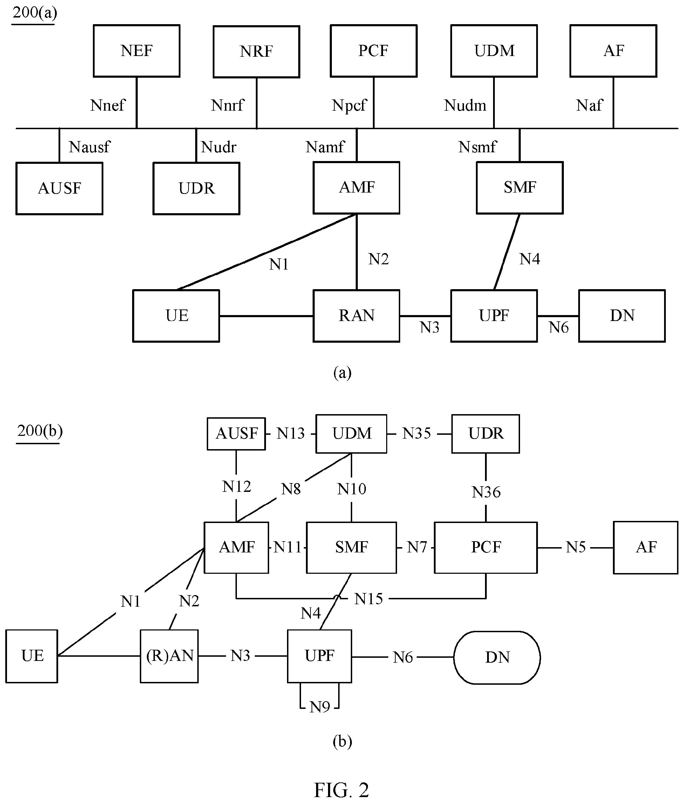

(a) to (c) in FIG. 1 are schematic block diagrams of a communication system according to this application;
(a) and (b) in FIG. 2 are diagrams of an architecture of a 5G system to which an embodiment of this application is applicable;
FIG. 3 is a diagram of a user plane architecture of a 5G VN service;
FIG. 4 is a schematic flowchart of a group communication method according to an embodiment of this application;
FIG. 5 is a schematic flowchart of another group communication method according to an embodiment of this application;
FIG. 6 is a schematic flowchart of still another group communication method according to an embodiment of this application;
FIG. 7 is a diagram of a communication architecture according to an embodiment of this application;
FIG. 8A and FIG. 8B are a schematic flowchart of still another group communication method according to an embodiment of this application;
FIG. 9 is a schematic block diagram of a communication apparatus according to an embodiment of this application;
FIG. 10 is a schematic block diagram of a communication apparatus according to another embodiment of this application;
FIG. 11 is a schematic block diagram of a communication apparatus according to still another embodiment of this application; and
FIG. 12 is a schematic block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise stated, "a plurality of" means two or more than two.

In embodiments of this application, unless otherwise stated or if there is no logic conflict, terms and/or descriptions between different embodiments are consistent and may be mutually referenced, and technical features in different embodiments may be combined into a new embodiment based on an internal logical relationship thereof.

It may be understood that various numerals used in this application are merely differentiated for ease of description, but are not intended to limit the scope of this application. The sequence numbers of the foregoing processes do not mean execution sequences, and the execution sequences of the processes should be determined based on functions and internal logic of the processes.

In the specification, claims, and accompanying drawings of this application, the terms "first", "second", "third", and "fourth", various other ordinal number terms, and the like (if existing) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) or new radio (new radio, NR) system, a long term evolution (long term evolution, LTE) system, and an LTE frequency division duplex (frequency division duplex, FDD) system, or an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, and machine-to-machine (machine-to-machine, M2M) communication, a machine type communication (machine type communication, MTC), and internet of things (internet of things, IoT) communication systems, or another communication system.

FIG. 1 shows three communication systems according to an embodiment of this application.

A communication system 100a includes a group management network element, a first session management network element and a second session management network element that communicate with the group management network element, a first user plane network element managed by the first session management network element, a first terminal device served by the first user plane network element, a second user plane network element managed by the second session management network element, and a second terminal device served by the second user plane network element.

It should be noted that only two session management network elements (that is, the first session management network element and the second session management network element) are shown as an example in (a) in FIG. 1. Certainly, there may be another session management network element communicating with the group management network element, for example, a third session management network element or a fourth session management network element. This is not specifically limited in this embodiment of this application.

It should be noted that in (a) in FIG. 1, only an example in which one session management network element communicates with one user plane network element is used for description. For example, the first session management network element communicates with the first user plane network element, and the second session management network element communicates with the second user plane network element. Certainly, one session management network element may communicate with a plurality of user plane network elements. For example, the first session management network element may communicate with the third user plane network element or the fourth user plane network element, or the second session management network element may communicate with a fifth user plane network element. This is not specifically limited in this embodiment of this application.

It should be noted that in (a) in FIG. 1, only an example in which the first user plane network element serves the first terminal device or the second user plane network element serves the second terminal device is used for description. Certainly, the first user plane network element may serve a plurality of terminal devices. For example, the first user plane network element may serve a third terminal device or a fourth terminal device. Alternatively, the second user plane network element may serve a plurality of terminals. For example, the second user plane network element may serve a fourth terminal device. This is not specifically limited in this embodiment of this application.

It should be noted that the network elements shown in (a) in FIG. 1 may communicate directly with each other or communicate through forwarding by another device. This is not specifically limited in this embodiment of this application.

Based on the communication system shown in (a) in FIG. 1, the first terminal device establishes a first session via the first user plane network element and the first session management network element after accessing a network. In a process of establishing the first session (or after establishment of the first session is completed), the first session management network element registers identification information of the first terminal device, identification information of the first session management network element, and identification information of the first session with the group management network element, and the group management network element may store the information. A specific storage form may be establishing a first context associated with the first session, where the first context includes the foregoing information. It should be understood that the group management network element may alternatively store the information in another manner. This is not limited in this application. Similarly, the second terminal device establishes a second session via the second user plane network element and the second session management network element after accessing the network. In a process of establishing the second session (or after establishment of the second session is completed), the second session management network element registers identification information of the second terminal device, identification information of the second session management network element, and identification information of the second session with the group management network element, and the group management network element may store the information, for example, establish a second context associated with the first session. In other words, the first session management network element and the first user plane network element serve the first session that has been established by the first terminal device, and the second session management network element and the second user plane network element serve the second session that has been established by the second terminal device. It should be understood that in the communication system 100a, an example in which the first terminal device and the second terminal device are served by different session management network elements is used for description, that is, the first session management network element is different from the second session management network element. In this case, when group communication between the first terminal device and the second terminal device needs to be established, the group management network element may trigger the first session management network element and the second session management network element to establish group communication between the first terminal device and the second terminal device. The following provides a possible implementation.

After receiving a group communication request message, the group management network element determines the first session management network element and the second session management network element. For example, the group management network element determines the first session management network element based on the first context and the identification information of the first terminal device, and determines the second session management network element based on the second context and the identification information of the second terminal device. Then, the group management network element triggers the first session management network element and the second session management network element to establish group communication between the first terminal device and the second terminal device. The group communication request message includes the identification information of the first terminal device and the identification information of the second terminal device.

For example, the group management network element sends a first notification message to the first session management network element, where the first notification message includes the identification information of the first terminal device, the identification information of the second terminal device, and the identification information of the second session management network element. The first notification message indicates the first session management network element to establish group communication between the first terminal device and the second terminal device.

After receiving the first notification message, the first session management network element sends a request message to the second session management network element based on the identification information of the second session management network element, where the request message includes tunnel information of the first user plane network element, the identification information of the first terminal device, and the identification information of the second terminal device. The request message may be a tunnel establishment request message or a session establishment request message. After receiving the request message from the first session management network element, the second session management network element configures a first forwarding rule for the second user plane network element based on the tunnel information of the first user plane network element and the identification information of the first terminal device, where the first forwarding rule is used to send a data packet whose destination address points to the first terminal device to the first user plane network element. The second session management network element sends a response message to the first session management network element, where the response message includes tunnel information of the second user plane network element. After receiving the response message from the second session management network element, the first session management network element configures a second forwarding rule for the first user plane network element based on the tunnel information of the second user plane network element and the identification information of the second terminal device, where the second forwarding rule is used to send a data packet whose destination address points to the second terminal device to the second user plane network element. Based on this, a tunnel between the first user plane network element and the second user plane network element may be established, and the first terminal device and the second terminal device may perform group communication via the tunnel between the first user plane network element and the second user plane network element. For a specific solution, refer to related descriptions in a method 400. Details are not described herein again.

For another example, the group management network element sends a first notification message to the first session management network element, and sends a second notification message to the second session management network element, where the first notification message includes the identification information of the first terminal device and the identification information of the second session management network element, and the second notification message includes the identification information of the second terminal device and the identification information of the first session management network element. The first notification message indicates the first session management network element to establish group communication between the first terminal device and a terminal device anchored to the second session management network element. The second notification message indicates the second session management network element to establish group communication between the second terminal device and a terminal device anchored to the first session management network element. After receiving the first notification message, the first session management network element sends a request message to the second session management network element based on the identification information of the second session management network element, where the request message includes tunnel information of the first user plane network element and the identification information of the first terminal device. The second session management network element configures a first forwarding rule for the second user plane network element based on the second notification message and the request message that are received, and sends a response message to the first session management network element. Other solutions are similar to the foregoing example, and details are not described herein again.

In another case, the first terminal device and the second terminal device may alternatively be served by a same session management network element. For example, in a communication system 100b shown in (b) in FIG. 1, both the first user plane network element and the second user plane network element are managed by the first session management network element, and the first user plane network element and the second user plane network element serve the first terminal device and the second terminal device respectively. In the communication system 100b, the first terminal device and the second terminal device are served by different user plane network elements. In other words, the first user plane network element is different from the second user plane network element.

Based on the communication system shown in (b) in FIG. 1, the first terminal device establishes a first session via the first user plane network element and the first session management network element after accessing a network, the first session management network element registers identification information of the first terminal device, identification information of the first session management network element, and identification information of the first session with the group management network element, and as described above, the group management network element may store the information in a first context associated with the first session. Similarly, the second terminal device establishes a second session via the second user plane network element and the first session management network element after accessing the network, the first session management network element registers identification information of the second terminal device, the identification information of the first session management network element, and identification information of the second session with the group management network element, and the group management network element may store the information in a second context associated with the second session.

After receiving a group communication request message, the group management network element determines the first session management network element, and then triggers the first session management network element to establish group communication between the first terminal device and the second terminal device. The following provides a possible implementation.

For example, the group management network element sends a first notification message to the first session management network element, where the first notification message includes the identification information of the first terminal device and the identification information of the second terminal device. After receiving the first notification message, the first session management network element determines the first user plane network element based on the identification information of the first terminal device, determines the second user plane network element based on the identification information of the second terminal device, then configures a third forwarding rule for the first user plane network element, and configures a fourth forwarding rule for the second user plane network element, where the third forwarding rule is used to send a data packet whose destination address points to the second terminal device to the second user plane network element, and the fourth forwarding rule is used to send a data packet whose destination address points to the first terminal device to the first user plane network element. Based on this, a tunnel between the first user plane network element and the second user plane network element may be established, and the first terminal device and the second terminal device may perform group communication via the tunnel between the first user plane network element and the second user plane network element. For a specific solution, refer to related descriptions in a method 500. Details are not described herein again.

In still another case, the first terminal device and the second terminal device may be served by a same session management network element and a same user plane network element. For example, in a communication system 100c shown in (c) in FIG. 1, the first user plane network element and the first session management network element serve the first terminal device and the second terminal device.

Based on the communication system shown in (c) in FIG. 1, the first terminal device establishes a first session via the first user plane network element and the first session management network element after accessing a network, the first session management network element registers identification information of the first terminal device, identification information of the first session management network element, and identification information of the first session with the group management network element, and the group management network element may store the information in a first context associated with the first session. Similarly, the second terminal device establishes a second session via the first user plane network element and the first session management network element after accessing the network, the first session management network element registers identification information of the second terminal device, the identification information of the first session management network element, and identification information of the second session with the group management network element, and the group management network element may store the information in a second context associated with the second session.

After receiving a group communication request message, the group management network element determines the first session management network element, and then triggers the first session management network element to establish group communication between the first terminal device and the second terminal device. The following provides a possible implementation.

For example, the group management network element sends a first notification message to the first session management network element, where the first notification message includes the identification information of the first terminal device and the identification information of the second terminal device. After receiving the first notification message, the first session management network element determines the first user plane network element based on the identification information of the first terminal device and the identification information of the second terminal device, and then configures a fifth forwarding rule for the first user plane network element, where the fifth forwarding rule is used to send a data packet whose destination address points to the first terminal device to an access network device of the first terminal device, and send a data packet whose destination address points to the second terminal device to an access network device of the first terminal device. Based on this, a local switch (local switch) path between the first terminal device and the second terminal device may be established, and the first terminal device and the second terminal device may perform group communication in a local switch manner. For a specific solution, refer to related descriptions in a method 500. Details are not described herein again.

In conclusion, according to the foregoing solution, group communication may be established for two terminal devices that have established a session.

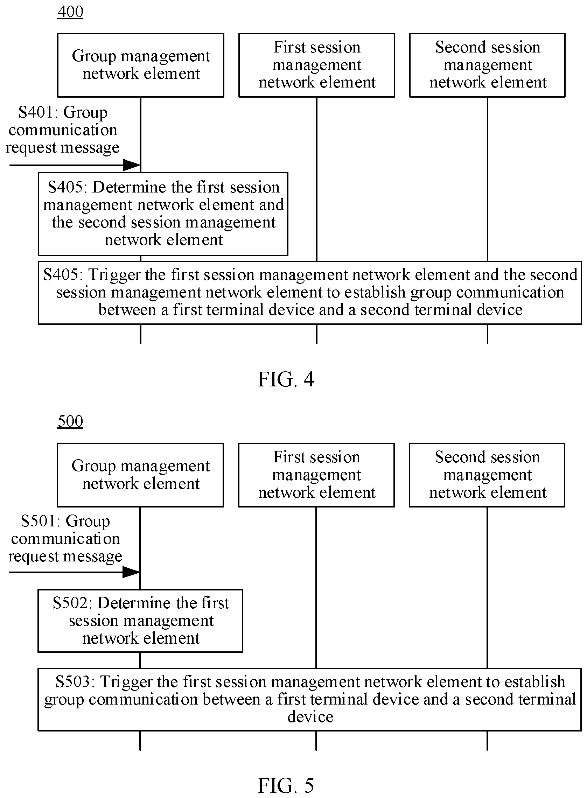

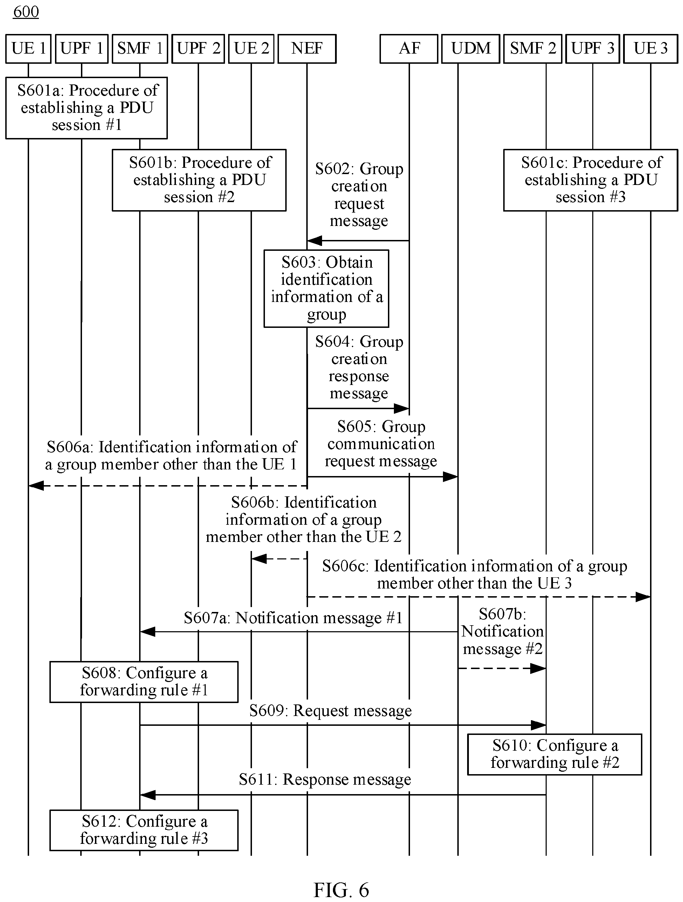

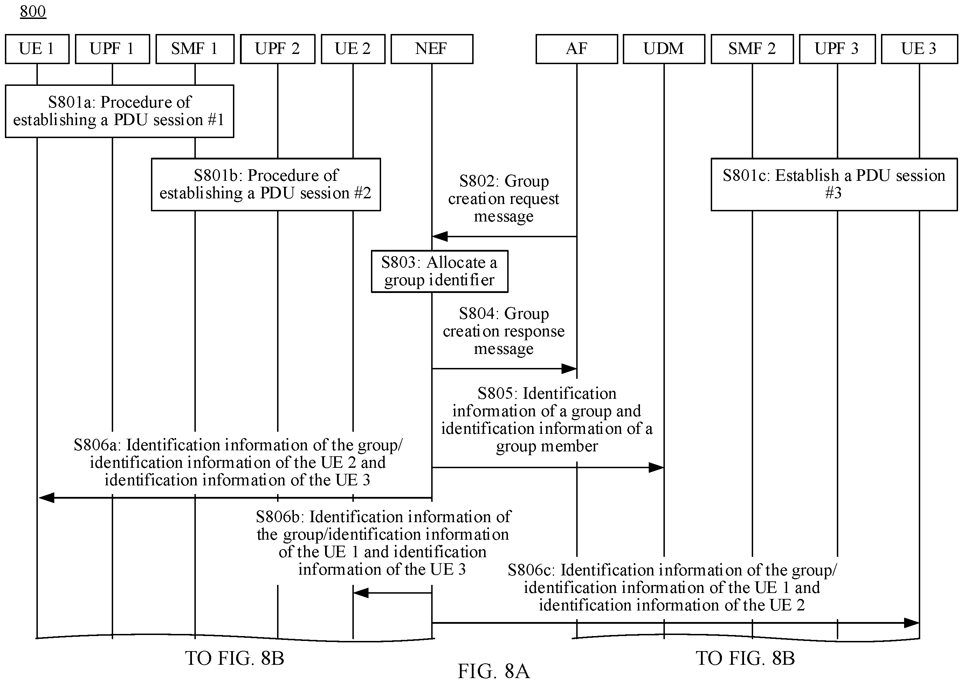

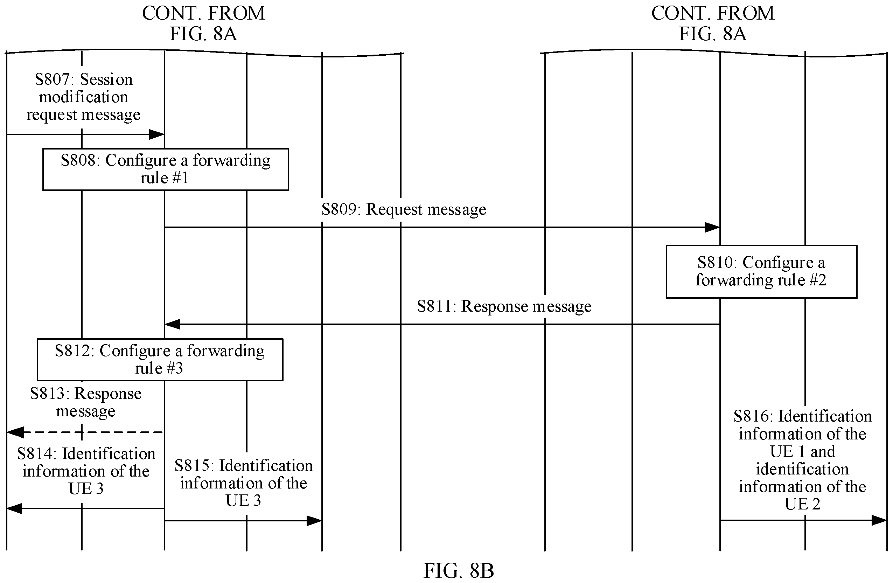

It should be understood that for a specific interaction process between the network elements in FIG. 1, refer to a method procedure in FIG. 4 or FIG. 5, or refer to any method procedure in FIG. 6 or FIG. 8A and FIG. 8B. For a specific implementation solution, refer to detailed descriptions in the method 400, the method 500, a method 600, and a method 800.

The communication systems 100a, 100b, and 100c shown in FIG. 1 may be applied to a 5th generation (5th generation, 5G) network architecture shown in (a) in FIG. 2 and/or (b) in FIG. 2, and certainly may also be applied to a future network architecture, for example, a 6th generation (6th generation, 6G) network architecture. This is not specifically limited in this embodiment of this application.

For example, it is assumed that when the communication system shown in FIG. 1 is applied to a 5G network shown in (a) in FIG. 2 and/or (b) in FIG. 2, the session management network element may be an SMF in 5G, the user plane network element may be a UPF in 5G, and the group management network element may be a UDM in 5G.

The following describes, by using examples with reference to (a) in FIG. 2 and (b) in FIG. 2, a 5G system to which an embodiment of this application is applicable. It should be understood that the 5G system described in this specification is merely an example, and should not constitute any limitation on this application.

It should also be understood that some network elements in the 5G system may communicate with each other via a service-based interface or a point-to-point interface. The following separately describes a point-to-point interface-based 5G system framework and a service-based interface-based 5G system framework with reference to (a) in FIG. 2 and (b) in FIG. 2.

As an example for description, (a) in FIG. 2 is a diagram of an architecture of a 5G system 200a to which an embodiment of this application is applicable. (a) in FIG. 2 is a diagram of a point-to-point interface-based 5G network architecture. As shown in (a) in FIG. 2, the network architecture may include but is not limited to the following network elements (or referred to as function network elements, functional entities, node, devices, or the like):
a (radio) access network device (radio access network, (R)AN), an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), unified data management (unified data management, UDM), a BSF network element, and a unified data repository (unified data repository, UDR).

The following briefly describes the network elements shown in (a) in FIG. 2.
1. A user equipment (user equipment, UE): It may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device having a wireless connection function or a vehicle-mounted device. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device or wearable device connected to a wireless modem, a terminal device in the 5G network, a terminal device in a future evolved public land mobile network (public land mobile network, PLMN), or the like.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may alternatively include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device capable of accessing a network. The terminal device and the access network device may communicate with each other by using a specific air interface technology.

Optionally, the user equipment may be configured to serve as a base station. For example, the user equipment may serve as a scheduling entity that provides a sidelink signal between user equipments in V2X, D2D, or the like. For example, a cellular phone and an automobile communicate with each other via a sidelink signal. The cellular phone communicates with a smart home device without relaying a communication signal by a base station.

2. The (radio) access network ((radio) access network, (R)AN) device: It is configured to provide a network access function for an authorized user equipment in a specific area, and is capable of using transmission tunnels of different quality of service based on a level of the user equipment, a service requirement, and the like.

The (R)AN can manage radio resources and provide an access service for the user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. The user plane function (user plane function, UPF) network element: It is used for packet routing and forwarding, quality of service (quality of service, QoS) handling for user plane data, and the like.

In a 5G communication system, a user plane network element may be the user plane function (user plane function, UPF) network element. In a future communication system, the user plane network element may still be the UPF network element, or may have another name. This is not limited in this application.

4. The access and mobility management function (access and mobility management function, AMF) network element: The access and mobility management function network element is mainly used for mobility management, access management, and the like, and may be configured to implement another function other than session management in the MME function, for example, a function such as access authorization/authentication.

In the future communication system, an access and mobility management device may still be the AMF, or may have another name. This is not limited in this application.

5. A session management function (session management function, SMF) network element: It is mainly configured to perform session management, user equipment internet protocol (internet protocol, IP) address allocation and management, selection and management of a user plane function, termination of interfaces towards policy control and charging functions, downlink data notification, and the like.

In the future communication system, a session management network element may still be the SMF network element, or may have another name. This is not limited in this application.

6. The policy control function (policy control function, PCF) network element: It is a unified policy framework for guiding network behavior, and provides policy rule information and the like for a control plane function network element (such as the AMF or the SMF).

In the future communication system, a policy control network element may still be the PCF network element, or may have another name. This is not limited in this application.

7. The application function (application function, AF): It is configured to perform application-affected data routing, wirelessly access a network exposure function network element, interact with a policy framework to perform policy control, and the like.

In the future communication system, the application network element may still be the AF network element, or may have another name. This is not limited in this application.

8. The unified data management (unified data management, UDM) network element: It is configured to process a UE identifier, access authentication, registration and mobility management, manage subscription data of a group member, and the like.

In the future communication system, the unified data management may still be the UDM network element, or may have another name. This is not limited in this application.

9. An authentication server function (authentication server function, AUSF) network element: It is configured to provide an authentication service, generate a key to implement two-way authentication for the user equipment, and support a unified authentication framework.

In the future communication system, the authentication server function network element may still be the AUSF network element, or may have another name. This is not limited in this application.

10. A network data analytics function (network data analytics function, NWDAF) network element: It is configured to identify a network slice instance, and load load-level information of the network slice instance. The network data analytics function enables NF consumers to subscribe to or unsubscribe from periodic notifications and notify the consumers when a threshold is exceeded.

In the future communication system, the network data analytics function network element may still be the NWDAF network element, or may have another name. This is not limited in this application.

11. A data network (data network, DN): It is a network beyond an operator network. The operator network may access a plurality of DNs, and a plurality of services may be deployed on the DN, to provide a service such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

Nausf, Nnef, Npcf, Nudm, Naf, Namf, Nsmf, N1, N2, N3, N4, and N6 in (a) in FIG. 2 are interface sequence numbers. For meanings of the interface sequence numbers, refer to meanings defined in a 3GPP standard protocol. This is not limited herein.

In the network architecture shown in (a) in FIG. 2, the network elements may communicate with each other via interfaces shown in the figure. As shown in the figure, the UE and the AMF may interact with each other via an N1 interface, and an interaction message may be referred to as, for example, an N1 message (N1 Message). The RAN and the AMF may interact with each other via an N2 interface, and the N2 interface may be for sending a non-access stratum (non-access stratum, NAS) message and the like. The RAN and the UPF may interact with each other via an N3 interface, and the N3 interface may be for transmitting user plane data and the like. The SMF and the UPF may interact with each other via an N4 interface, and the N4 interface may be for transmitting information such as tunnel identifier information of an N3 connection, data buffering indication information, and a downlink data notification message. The UPF and the DN may interact with each other via an N6 interface, and the N6 interface may be for transmitting user plane data and the like. Relationships between other interfaces and network elements are shown in (a) in FIG. 2. For brevity, details are not described herein.

(b) in FIG. 2 is a diagram of a point-to-point interface-based 5G network architecture. For descriptions of functions of network elements in the figure, refer to descriptions of functions of corresponding network elements in (a) in FIG. 2. Details are not described again. A main difference between (b) in FIG. 2 and (a) in FIG. 2 lies in that interfaces between the network elements in (b) in FIG. 2 are point-to-point interfaces rather than service-based interfaces.

In the architecture shown in (b) in FIG. 2, names and functions of the interfaces between the network elements are as follows.
(1) N7 represents an interface between a PCF and an SMF, and is configured to deliver a protocol data unit (protocol data unit, PDU) session granularity control policy and a service data flow granularity control policy.
(2) N15 represents an interface between the PCF and an AMF, and is configured to deliver a UE policy and an access control related policy.
(3) N5 represents an interface between an AF and the PCF, and is configured to deliver an application service request and report a network event.
(4) N4 represents an interface between the SMF and a UPF, and is configured to transfer information between a control plane and a user plane, including delivery of forwarding rules, QoS control rules, traffic statistics rules, and the like from the control plane to the user plane, and reporting of user plane information.
(5) N11 represents an interface between the SMF and the AMF, and is configured to: transfer PDU session tunnel information between a RAN and the UPF, transfer a control message to be sent to a UE, transfer radio resource control information to be sent to the RAN, and the like.
(6) N2 represents an interface between the AMF and the RAN, and is configured to transfer radio bearer control information and the like from a core network side to the RAN.
(7) N1 represents an interface between the AMF and the UE, is access-irrelevant, and is configured to transfer the QoS control rule and the like to the UE.
(8) N8 represents an interface between the AMF and UDM, and is used by the AMF to obtain, from the UDM, subscription data and authentication data related to access and mobility management, and used by the AMF to register current mobility management related information of the UE with the UDM.
(9) N10 represents an interface between the SMF and the UDM, and is used by the SMF to obtain, from the UDM, subscription data related to session management, and used by the SMF to register current session related information of the UE with the UDM.
(10) N35 represents an interface between the UDM and a UDR, and is used by the UDM to obtain user subscription data information from the UDR.
(11) N36 represents an interface between a PCF and the UDR, and is used by the PCF to obtain policy-related subscription data and application data-related information from the UDR.
(12) N12 represents an interface between the AMF and an AUSF, and is used by the AMF to initiate an authentication procedure to the AUSF, where an SUCI may be carried as a subscription identifier.
(13) N13 represents an interface between the UDM and the AUSF, and is used by the AUSF to obtain a user authentication vector from the UDM, to perform the authentication procedure.

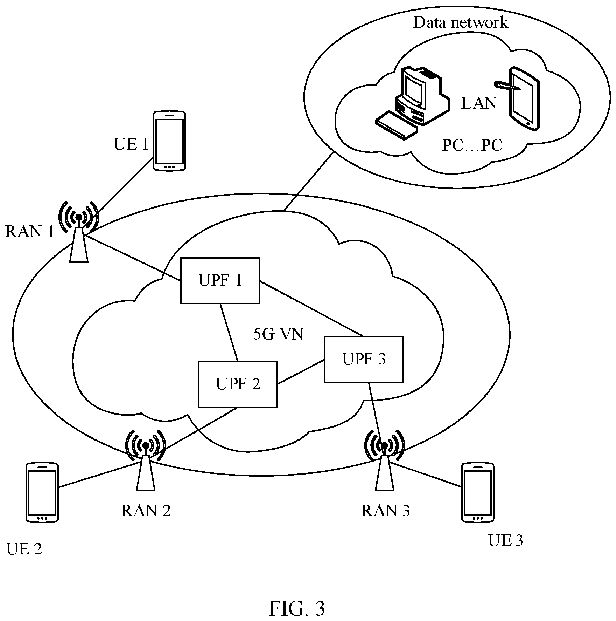

FIG. 3 is a diagram of a user plane architecture 300 of a 5G VN (virtual network) service. A UPF 1 to a UPF 3 belong to one 5G VN. A UE 1 to a UE 3 are separately connected to one UPF in the 5G VN via one RAN. For example, the UE 1 is connected to the UPF 1 via a RAN 1, and the UE 2 is connected to the UPF 2 via a RAN 2, and the UE 3 is connected to the UPF 3 via a RAN 3. Therefore, the UE 1 to the UE 3 access a user plane (user plane, UP) of the corresponding 5G VN via the UPFs. For example, the UE 1 to the UE 3 separately access a 5GC UP via the UPF 1 to the UPF 3, and the UE 1 to the UE 3 belong to one 5G VN group. One UE is located in one 5G VN (or it may be understood that one UE belongs to one 5G VN or 5G VN service, the UE subscribes to one 5G VN or 5G VN service, or the UE is associated with or corresponds to one 5G VN or 5G VN service). The user plane of the 5G VN may communicate with an existing VN in a DN via an N6 interface. Alternatively, the user plane of the 5G VN may associate protocol data unit (protocol data unit, PDU) sessions (sessions) of different UEs via an N19 connection between UPFs (for example, the UPF 1 to the UPF 3) in the 5G VN, to implement private communication between the UEs. It should be noted that the 5G VN may also be referred to as a 5G local area network (5G local access network, 5G LAN), and the 5G VN and the 5G local area network are not distinguished in this application.

FIG. 4 is an example flowchart of the method 400 according to an embodiment of this application. The following describes the method 400 by using an example with reference to each step.

S401: A group management network element receives a group communication request message.

For example, the group communication request message includes identification information of a first terminal device and identification information of a second terminal device. In an implementation, the group management network element receives the group communication request message from a network exposure function network element. It should be understood that the network exposure function network element may also be referred to as a network capability exposure network element, and may correspond to the NEF in the 5G system shown in FIG. 2.

For example, in a scenario, an application function network element sends a group creation request or the group communication request message (the following uses a group creation request message as an example for description) to the network exposure function network element, where the group creation request message includes identification information of a group member. Optionally, the group creation request message further includes external group identification information (an external group ID). Correspondingly, the network exposure function network element receives the group creation request message from the application function network element. Then, the network exposure function network element sends the received external group identification information to the group management network element. The group management network element detects that a group corresponding to the external group identification information is a new group, allocates internal group identification information (an internal group ID) to the group, and sends the internal group identification information to the network exposure function network element. The network exposure function network element stores a mapping relationship between the external group identification information and the internal group identification information. Alternatively, the network exposure function network element maps the received external group identification information into the internal group identification information, and then sends the internal group identification information to the group management network element. On the other hand, the network exposure function network element sends the identification information (including the identification information of the first terminal device and the identification information of the second terminal device) of the group member in a group to the group management network element. It should be noted that the network exposure function network element may forward the group creation request message received from the application function network element to the group management network element, or the network exposure function network element encapsulates information included in the group creation request message into a new group communication request message and then sends the new group communication request message to the group management network element.

The group management network element may be a logical function network element, or may be an independent network element. For example, the group management network element is a group session management network element (group session management function, GSMF). Alternatively, the group management network element may be another existing network element integrated with a group management function. For example, the group management network element is a unified data management (unified data management, UDM) network element, a session management function (session management function, SMF) network element, or a policy control function (policy control function, PCF) network element. This is not limited in this application. Alternatively, the group management network element may be a functional module in a specific network element. This is not limited in this application.

The identification information of the first terminal device may be a subscription permanent identifier (subscription permanent identifier, SUPI), a generic public user identifier (generic public subscription identifier, GPSI), address information (for example, an internet protocol address (internet protocol address, IP address) or a media access control address (media access control address, MAC address) of the first terminal device), or the like of the first terminal device. The identification information of the second terminal device is similar to this, and details are not described again.

The group communication request message may indicate to establish group communication between the first terminal device and the second terminal device. Alternatively, the group communication request message indicates that the first terminal device and the second terminal device belong to a same group, or indicate to configure a session that has been established by the first terminal device and the second terminal device, to implement group communication between the first terminal device and the second terminal device. In an implementation, the information may be implicitly indicated. For example, a message name (for example, 5G LAN communication request) of the group communication request message indicates to establish group communication between the first terminal device and the second terminal device. In another implementation, the information may be explicitly indicated. For example, the group communication request message includes explicit indication information or an information element, and the indication information or the information element indicates to establish group communication between the first terminal device and the second terminal device, for example, the group communication request message includes a 5G local area network communication indication (5G LAN communication indication) or identification information of a 5G LAN group, and the network capability exposure network element or the group management network element determines, based on the indication information or the information element, that group communication needs to be enabled.

In this embodiment of this application, group communication may be 5G LAN communication (5G LAN communication) or 5G VN communication, and establishing group communication between the first terminal device and the second terminal device may mean establishing 5G VN communication or 5G LAN communication between the first terminal device and the second terminal device. For details, refer to related descriptions in FIG. 3. Details are not described again.

It should be understood that the foregoing example is described by using an example in which the group communication request message includes identification information of two terminal devices (that is, the first terminal device and the second terminal device). However, it should be understood that the group communication request message may further include identification information of three or more terminal devices. For example, the group communication request message includes identification information of the first terminal device, the second terminal device, and a third terminal device. In this case, the group communication request message may indicate to establish group communication between the first terminal device, the second terminal device, and the third terminal device. This is not limited in this application.

Optionally, the group communication request message may further include identification information of a group, where the first terminal device and the second terminal device belong to the group. It should be understood that in addition to the first terminal device and the second terminal device, the group may further include another group member. This is not limited in this application. As described above, the identification information of the group may indicate to establish group communication between the first terminal device and the second terminal device. Specifically, the identification information of the group may be information used to identify or determine the group. For example, the identification information of the group is a group identifier (group ID) of the group, a data network name (data network name, DNN), or combination information of a data network name and single network slice selection assistance information (single network slice selection assistance information, S-NSSAI). This is not limited in this application.

S402: The group management network element determines a first session management network element and a second session management network element.

For example, the group management network element determines the first session management network element and the second session management network element in response to the group communication request message, where the first session management network element serves a first session that has been established by the first terminal device, and the second session management network element serves a second session that has been established by the second terminal device. It should be understood that in this embodiment of this application, the first session management network element is different from the second session management network element. In other words, the first terminal device and the second terminal device are served by different session management network elements.

For example, the group management network element obtains, based on the identification information of the first terminal device, a first context associated with the first session, where the first context includes identification information of the first session management network element.

It should be noted that the first session is a session that has been established by the first terminal device, that is, the first terminal device establishes the first session before S401 via the first session management network element. The first session management network element sends a first registration message to the group management network element in a process of establishing the first session (or after establishment of the first session is completed), where the first registration message includes the identification information of the first terminal device, the identification information of the first session management network element, and identification information of the first session. Correspondingly, the group management network element stores the identification information of the first session management network element and the identification information of the first session in the first context after receiving the first registration message, that is, the group management network element records that the first terminal device currently establishes the first session and that the first session management network element serves the first session, or in other words, the first session is anchored to the first session management network element. Based on this, after receiving the group communication request message, the group management network element may determine, based on the identification information of the first terminal device and the first context, that a session management network element serving for the first session that has been established by the first terminal device is the first session management network element.

Similarly, the group management network element obtains, based on the identification information of the second terminal device, a second context associated with the second session, where the second context includes identification information of the second session management network element. In addition, the second session management network element sends a second registration message to the group management network element in a process of establishing the second session (or after establishment of the second session is completed), where the second registration message includes the identification information of the second terminal device, the identification information of the second session management network element, and identification information of the second session. Correspondingly, the group management network element stores the identification information of the second session management network element and the identification information of the second session in the second context after receiving the second registration message, that is, the group management network element records that the second terminal device currently establishes the second session and is anchored to the second session management network element. Based on this, after receiving the group communication request message, the group management network element may determine, based on the identification information of the second terminal device and the second context, that a session management network element serving for the second session that has been established by the second terminal device is the second session management network element.

S403: The group management network element triggers the first session management network element and the second session management network element to establish group communication between the first terminal device and the second terminal device.

For example, after determining the first session management network element and the second session management network element in response to the group request message, the group management network element triggers the first session management network element and the second session management network element to establish group communication between the first terminal device and the second terminal device.

In an implementation, the group management network element sends a first notification message to the first session management network element, and sends a second notification message to the second session management network element, where the first notification message includes the identification information of the first terminal device and the identification information of the second session management network element, and the second notification message includes the identification information of the second terminal device and the identification information of the first session management network element. In other words, in this implementation, the group management network element separately sends a notification message to a session management network element corresponding to a terminal device that needs to perform group communication. The first notification message indicates the first session management network element to establish group communication between the first terminal device and a terminal device anchored to the second session management network element. The terminal device anchored to the second session management network element means that the second session management network element serves a session of the terminal device, or after receiving a session establishment request message from the terminal device, a mobility management network element selects the second session management network element to serve the terminal device, and the terminal device is anchored to the second session management network element, or the second session management network element is an anchor session management network element for a session of the terminal device.

In this implementation, after receiving the first notification message, the first session management network element finds that the first notification message further includes the identification information of the second session management network element, and the first session management network element determines that the first terminal device needs to perform group communication with the terminal device served by the second session management network element. To enable group communication between group members managed by different session management network elements, the first session management network element establishes a session with the second session management network element, or the first session management network element establishes a tunnel between a user plane network element for the first terminal device and a user plane network element managed by the second session management network element for the second terminal device.

Based on this, the first session management network element sends a request message to the second session management network element based on the identification information of the second session management network element, where the request message includes tunnel information of a first user plane network element and the identification information of the first terminal device. The first user plane network element serves the first session that has been established by the first terminal device. Alternatively, the first user plane network element is an anchor user plane network element for the first session. It should be understood that the tunnel information of the first user plane network element may be allocated by the first session management network element, or may be allocated by the first user plane network element. This is not limited in this application. The tunnel information of the first user plane network element may be N19 tunnel information of the first user plane network element, and includes address information and port number information of the first user plane network element.

The request message may be a session establishment request (PDUSession_Create Request) message. For example, the request message is used to request to establish the session between the first session management network element and the second session management network element. Alternatively, the request message may be a tunnel establishment request message. For example, the request message is used to request to establish a tunnel between the first user plane network element and a user plane network element managed by the second session management network element. Alternatively, the request message may be a tunnel information request message. For example, the request message is used to request tunnel information of a user plane network element that is controlled by the second session management network element and that serves a group member. A specific name of the message is not limited in this application.

Optionally, the request message may further include the identification information of the group. Different group identification information may identify different groups. An N19 tunnel between the first user plane network element and a second user plane network element may be at a device granularity, that is, different groups correspond to a same N19 tunnel. Alternatively, an N19 tunnel between the first user plane network element and a second user plane network element may be at a group granularity, that is, different groups correspond to different N19 tunnels.

Correspondingly, the second session management network element sends a response message to the first session management network element after receiving the request message from the first session management network element, where the response message includes tunnel information of the second user plane network element and the identification information of the second terminal device. The second user plane network element serves a second session that has been established by the second terminal device. It should be understood that if the request message carries the identification information of the group, the second session management network element determines a terminal device included in the group corresponding to the identification information of the group, and determines the terminal device as the second terminal device; or if the request message does not carry the identification information of the group, the second session management network element determines a terminal device served by the second session management network element as the second terminal device, the second session management network element determines a terminal device that is served by the second session management network element and that has a group communication requirement as the second terminal device, or the second session management network element determines the second terminal device based on the second notification message from the group management network element. This is not limited in this application.

It should be noted that the second session management network element may determine, based on the second notification message, whether to accept the request message of the first session management network element. For example, the second session management network element accepts the request message of the first session management network element only after receiving the second notification message. In other words, the second session management network element accepting the request message of the first session management network element only if determining, based on the identification information of the first session management network element included in the second notification message, that the session with the first session management network element needs to be established, or rejects the request message from another session management network element if determining, based on the identification information of the first session management network element included in the second notification message, that the session with the first session management network element does not need to be established.

On the other hand, the second session management network element configures a first forwarding rule for the second user plane network element, where the first forwarding rule is used to send a data packet whose destination address points to the first terminal device to an access network device of the first terminal device, or the first forwarding rule is used to encapsulate the tunnel information of the first user plane network element into a data packet whose destination address is the identification information of the first terminal device, and send the data packet to the first user plane network element.

Correspondingly, the first session management network element configures a second forwarding rule for the first user plane network element after receiving the response message from the second session management network element, where the second forwarding rule is used to send a data packet whose destination address points to the second terminal device to the second user plane network element, or the second forwarding rule is used to encapsulate the tunnel information of the second user plane network element into a data packet whose destination address is the identification information of the second terminal device, and send the data packet to the second user plane network element.

Based on the foregoing solution, a data forwarding path may be established between the first terminal device and the second terminal device. The data forwarding path follows a group communication manner (for example, a 5G LAN group communication manner), so that group communication between the first terminal device and the second terminal device can be implemented. In a 5G system, the data forwarding path between the first terminal device and the second terminal device does not go out of a 5G network.

Based on the foregoing solution, communication between different group members in a group may be established. Particularly, the group herein may be a group dynamically created. Specifically, when the group management network element receives information indicating group communication (for example, information such as identification information of the group or a group communication indication) and identification information of the group members, the group management network element may send a message to a session management network element serving the group, so that these session management network elements can establish a data forwarding path between the group members. A session that has been established by the group member may be reused, and the group member does not need to establish a new session. Therefore, the session usage efficiency can be improved, and a delay of enabling group communication can be shortened. In addition, the foregoing solution does not limit sessions of different group members to correspond to a same data network.

It should be understood that the foregoing solution may alternatively be triggered by the second session management network element.

Optionally, before the first session management network element sends the request message to the second session management network element, the first session management network element may check whether the session between the first session management network element and the second session management network element has been established. If the session has been established, in an implementation, the first session management network element no longer requests the second session management network element to establish the session, but requests to reuse the session previously established. In this case, the request message may be a session update request message. In another implementation, the first session management network element does not perform determining, but keeps requesting the second session management network element to establish the session. After receiving the request message from the first session management network element, the second session management network element checks whether the session between the first session management network element and the second session management network element has been established, and if the session has been established, the second session management network element rejects a request of the first session management network element. If the first session management network element receives a rejection message from the second session management network element, the first session management network element may send a session update request message to the second session management network element.

In another implementation, the group management network element sends a third notification message to the first session management network element, where the third notification message includes the identification information of the first terminal device, the identification information of the second terminal device, and the identification information of the second session management network element. In other words, in this implementation, the group management network element may send a notification message to only one of session management network elements corresponding to terminal devices that need to perform group communication.

In this implementation, after receiving the third notification message, the first session management network element finds that the third notification message includes the identification information of the second terminal device that is not served by the first session management network element and the identification information of the second session management network element. In this case, the first session management network element determines that the first terminal device needs to perform group communication with the second terminal device served by the second session management network element.

Based on this, the first session management network element sends a request message to the second session management network element based on the identification information of the second session management network element, where the request message includes tunnel information of a first user plane network element, the identification information of the first terminal device, and the identification information of the second terminal device.

Correspondingly, after receiving the request message from the first session management network element, the second session management network element determines a second user plane network element serving the second terminal device. The second session management network element or the second user plane network element allocates tunnel information (for example, N19 tunnel information) of the second user plane network element. The second session management network element sends a response message to the first session management network element, where the response message includes the tunnel information of the second user plane network element. Optionally, the identification information of the second terminal device may be further included.

On the other hand, the first session management network element and the second session management network element respectively configure a first forwarding rule and a second forwarding rule for the first user plane network element and the second user plane network element. For details, refer to the foregoing examples. Details are not described herein again.

Based on this, a tunnel between the first user plane network element and the second user plane network element may be established, and the first terminal device and the second terminal device may perform group communication via the tunnel between the first user plane network element and the second user plane network element. In other words, according to the foregoing solution, group communication may be established for terminal devices that have established a session.

In the foregoing method 400, the first terminal device and the second terminal device are served by different session management network elements. However, it should be understood that the first terminal device and the second terminal device may alternatively be served by a same session management network element. The following describes, with reference to the method 500, another possible implementation of a group communication method provided in embodiments of this application.

S501: A group management network element receives a group communication request message.

It should be understood that S501 is similar to S401 in the method 400, and details are not described herein again.

S502: The group management network element determines a first session management network element.

For example, the group management network element determines the first session management network element in response to the group communication request message, where the first session management network element serves a first session that has been established by a first terminal device and a second session that has been established by a second terminal device.

For example, the group management network element obtains, based on identification information of the first terminal device, a first context associated with the first session, and obtains, based on identification information of the second terminal device, a second context associated with the second session, where both the first context and the second context each include identification information of the first session management network element. In other words, the group management network element determines that the first terminal device and the second terminal device are served by a same session management network element.

S503: The group management network element triggers the first session management network element to establish group communication between the first terminal device and the second terminal device.

For example, after determining the first session management network element in response to the group request message, the group management network element triggers the first session management network element to establish group communication between the first terminal device and the second terminal device. For example, the group management network element sends a fourth notification message to the first session management network element, where the fourth notification message includes the identification information of the first terminal device and the identification information of the second terminal device. Correspondingly, the first session management network element establishes group communication between the first terminal device and the second terminal device after receiving the fourth notification message from the group management network element. The following provides descriptions with reference to examples.

Optionally, the first session management network element separately determines user plane network elements serving the first terminal device and the second terminal device.

In an implementation, the first terminal device and the second terminal device are served by different user plane network elements. For example, a first user plane network element serves the first session that has been established by the first terminal device, and a second user plane network element serves the second session that has been established by the second terminal device, where the first user plane network element is different from the second user plane network element, but both the first user plane network element and the second user plane network element are managed by the first session management network element.

In this implementation, the group management network element configures a third forwarding rule for the first user plane network element, and configures a fourth forwarding rule for the second user plane network element, where the third forwarding rule is used to send a data packet whose destination address points to the second terminal device to the second user plane network element, and the fourth forwarding rule is used to send a data packet whose destination address points to the first terminal device to the first user plane network element. For a manner for allocating tunnel information of the first user plane network element and tunnel information of the second user plane network element, refer to the foregoing steps. Details are not described again.

In another implementation, the first terminal device and the second terminal device are served by a same user plane network element. For example, a first user plane network element serves the first session that has been established by the first terminal device and the second session that has been established by the second terminal device.

In this implementation, the group management network element configures a fifth forwarding rule for the first user plane network element, where the fifth forwarding rule is used to send a data packet whose destination address points to the first terminal device to an access network device of the first terminal device, and send a data packet whose destination address points to the second terminal device to an access network device of the second terminal device.

To facilitate understanding of the solutions provided in embodiments of this application, the following describes, based on a 5G system and with reference to a method flowchart in FIG. 6, the method 600 provided in an embodiment of this application. It should be understood that in some implementations, an SMF 1 in the following method 600 may correspond to the first session management network element in the method 400 or the method 500, and an SMF 2 may correspond to the second session management network element in the method 400 or the method 500. In this case, related explanations or descriptions in the method 400/500 and the method 600 may be mutually referenced.

The following describes the method 600 by using an example with reference to each step.

In S601a, a UE 1 performs a procedure of establishing a PDU session #1 via the SMF 1 and a UPF 1.

For example, the UE 1 establishes the PDU session #1 via the SMF 1 and the UPF 1. In other words, the SMF 1 and the UPF 1 serve the PDU session #1 of the UE 1. A specific process is not limited in this application.

However, it should be noted that the SMF 1 registers identification information of the UE 1, identification information of the SMF 1, and identification information of the PDU session #1 with UDM in a process of establishing the PDU session #1 (in other words, after establishment of the PDU session #1 is completed). For example, the SMF 1 sends a registration message to the UDM, where the registration message includes the identification information of the UE 1, the identification information of the SMF 1, and the identification information of the PDU session #1. After receiving the registration message from the SMF 1, the UDM stores the identification information of the UE 1, the identification information of the SMF 1, and the identification information of the PDU session #1, for example, in a context #1, where the context #1 is associated with the PDU session #1. A form in which the UDM stores the foregoing information is not limited. The following uses only an example in which a context is used as a storage form for description.

Similarly, in S601b, a UE 2 performs a procedure of establishing a PDU session #2 via the SMF 1 and a UPF 2.

Similarly, in S601c, a UE 3 performs a procedure of establishing a PDU session #3 via the SMF 2 and a UPF 3.

It should be noted that the SMF 1 registers identification information of the UE 2, the identification information of the SMF 1, and identification information of the PDU session #2 with the UDM in a process of establishing the PDU session #2 (in other words, after establishment of the PDU session #2 is completed). The UDM stores the identification information of the UE 2, the identification information of the SMF 1, and the identification information of the PDU session #2 in a context #2 associated with the PDU session #2. The SMF 2 registers identification information of the UE 2, identification information of the SMF 2, and identification information of the PDU session #3 with the UDM in a process of establishing the PDU session #3 (in other words, after establishment of the PDU session #3 is completed). The UDM stores the identification information of the UE 2, the identification information of the SMF 2, and the identification information of the PDU session #3 in a context #3 associated with the PDU session #3.

It should be noted that in this embodiment, an example in which the UE 1 and the UE 2 are served by a same SMF (that is, the SMF 1) and the UE 1/UE 2 and the UE 3 are served by different SMFs (that is, the UE 1 and the UE 2 are served by the SMF 1, and the UE 3 is served by the SMF 2) is used for description. On the other hand, a UPF (that is, the UPF 1) serving for a session of the UE 1 and a UPF (that is, the UPF 2) serving for a session of the UE 2 may be the same or different.

In S602, an AF sends a group creation request message to a NEF. Correspondingly, the NEF receives the group creation request message from the AF.

For example, the group creation request message is used to request to create a group. The group herein may have different names in different scenarios. For example, in a 5G VN communication scenario, the group may also be referred to as a 5G VN group, a 5G VN group, or the like. This is not limited. Alternatively, the group creation request message is used to request to establish 5G VN communication. Alternatively, the group creation request message is used to request to allocate group identification information to a 5G VN group.

It should be understood that the group creation request message may also have another name. For example, the group creation request message may also be referred to as a group communication request message. This is not limited in this application. The message indicates that a group member requests to establish group communication, where the group communication may be 5G VN communication or 5G LAN communication.

The group creation request message includes identification information of a plurality of group members. The group members herein are UEs in a to-be-created 5G VN group. For example, the group members herein may be a plurality of UEs that have established sessions. The identification information of the group member herein may be, for example, a GPSI, an SUPI, or an IP address of the UE. This is not limited in this application. In this embodiment of this application, an example in which the group members are the UE 1, the UE 2, and the UE 3 is used for description. However, it should be understood that the group may alternatively include only two group members, or may include four or more group members. This is not limited in this application. Optionally, the group creation request message further includes external group identification information.

In a possible implementation, the AF may trigger a group creation procedure based on a request of another network element. For example, before S602, the AF receives, from a UE 4, a request message for creating a 5G VN group, where the request message includes an identifier of the UE 1, an identifier of the UE 2, and an identifier of the UE 3, and the request message is used to request to create the 5G VN group including the UE 1, the UE 2, and the UE 3, or the request message is used to request to establish 5G VN communication between the UE 1, the UE 2, and the UE 3. The UE 4 may be any one of the UE 1, the UE 2, and the UE 3, or may be another UE different from the UE 1, the UE 2, and the UE 3. Alternatively, the UE 4 may be replaced with any other network element or entity. This is not limited in this application. In other words, the UE 4 may or may not be a group member. In S602, the AF sends the group creation request message to the NEF based on the request message of the UE 4.

In another possible implementation, the AF may alternatively determine to trigger a group creation procedure. For example, the AF initiates the group creation procedure by using a UE registered with the AF as a group member. Specifically, for example, before S602, the UE 1, the UE 2, and the UE 3 separately send a registration request message to the AF, where the registration request message of the UE 1 includes an identifier of the UE 1, the registration request message of the UE 2 includes an identifier of the UE 2, the registration request message of the UE 3 includes an identifier of the UE 3. Then, the AF determines, based on a collected identifier of the UE (that is, the identifier of the UE 1, the identifier of the UE 2, and the identifier of the UE 3), to create a 5G VN group including the UE 1, the UE 2, and the UE 3.

In S603, optionally, the NEF obtains identification information of the group.

In an implementation, after receiving the group creation request message from the AF, the NEF allocates, based on the group creation request message, the identification information to the group that the AF requests to create, where the identification information of the group may be referred to as a group identifier, for example, may be denoted as a group ID, or may also be denoted as a 5G VN group ID, a 5G LAN group ID, or the like.

In another implementation, the group creation request message includes external group identification information (an external group ID). Correspondingly, the NEF obtains the external group identification information from the group creation request message.

In another implementation, the group creation request message includes external group identification information. The NEF sends the external group identification information to the UDM. The UDM detects that a group corresponding to the external group identification information is a new group. The UDM allocates internal group identification information to the group. The UDM sends the internal group identification information to the NEF. The NEF stores a mapping relationship between the external group identification information and the internal group identification information.

In another implementation, the group creation request message includes external group identification information, and the NEF maps the received external group identification information to internal group identification information.

Optionally, if the identification information of the group member (that is, the identification information of the UE 1, the identification information of the UE 2, and the identification information of the UE 3) carried in the group creation request message is an external identifier, the NEF may convert the external identifier into an internal identifier.

In S604, the NEF sends a group creation response message to the AF. Correspondingly, the AF receives the group creation response message from the NEF.

For example, the NEF sends the group creation response message to the AF in response to the group creation request message of the AF, where the group creation response message includes indication information indicating a group creation success or failure.

In S605, the NEF sends a group communication request message to the UDM. Correspondingly, the UDM receives the group communication request message from the NEF. It should be noted that the NEF may forward, to the UDM, the group creation request message received from the AF. In this case, the group communication request message may be understood as the group creation request message. Alternatively, the NEF encapsulates information (for example, the identification information of the group member) included in the group creation request message into a new group communication request message, and sends the new group communication request message to the UDM.

For example, the group communication request message includes an identifier of the group member (that is, the identifier of the UE 1, the identifier of the UE 2, and the identifier of the UE 3). The group communication request message is used to request to establish group communication between the group members, or in other words, the group communication request message is used to request to establish group communication between the UE 1, the UE 2, and the UE 3.

Optionally, the group communication request message may further include the identification information of the group. The identification information of the group may indicate the UDM to enable group communication. It should be noted that if the group communication request message carries the external group identifier, the UDM allocates the internal group identifier to the group based on the external group identifier. Further, the UDM separately stores a group identifier in subscription data (subscription data) of the UE 1, the UE 2, and the UE 3. Alternatively, the UDM adds subscription data of a group granularity, and maintains a mapping relationship between the group identifier (which may be the internal group identifier or the external group identifier) and the identifier of the group member.

Optionally, the group communication request message may further include other indication information, to indicate the UDM to enable group communication. The indication information may be indicated by using a name of the group communication request message, or indicated by adding explicit indication information to the group communication request message. This is not limited in this application.

Optionally, in S606a, the NEF sends identification information of a group member other than the UE 1 to the UE 1.

Optionally, in S606b, the NEF sends identification information of a group member other than the UE 2 to the UE 2.

Optionally, in S606c, the NEF sends identification information of a group member other than the UE 3 to the UE 3.

For example, the NEF sends the identification information (for example, an IP address of the UE 2 and an IP address of the UE 3) of the group member (that is, the UE 2 and the UE 3) other than the UE 1 to the UE 1. For example, the NEF determines, based on the identification information of the UE 1, that an SMF serving the UE 1 is the SMF 1, and then sends the identification information of the UE 2 and the identification information of the UE 3 to the UE 1 via the SMF 1. Alternatively, the NEF determines, based on the identification information of the UE 1, that a PCF serving the UE 1 is a PCF 1, and then sends the identification information of the UE 2 and the identification information of the UE 3 to the UE 1 via the PCF 1. For another example, the NEF sends the identification information of the UE 2 and the identification information of the UE 3 to the AF, and then the AF sends the identification information of the UE 2 and the identification information of the UE 3 to the UE 1 via an application layer (a user plane path). Based on this, the UE 1 can know a UE with which the UE 1 can perform group communication, to send data to a specific UE.

Similarly, the NEF sends the identification information of the group member (that is, the UE 1 and the UE 3) other than the UE 2 to the UE 2. It should be understood that because the UE 1 and the UE 2 are served by a same SMF (namely, the SMF 1), the NEF may send both the identification information in S606a and the identification information in S606b via a same message. Based on this, the UE 2 can know a UE with which the UE 2 can perform group communication, to send data to a specific UE.

Similarly, the NEF sends the identification information of the group member (that is, the UE 1 and the UE 2) other than the UE 3 to the UE 3. A specific manner is similar to that in the foregoing example, and details are not described again. Based on this, the UE 3 can know a UE with which the UE 3 can perform group communication, to send data to a specific UE.

Optionally, in another possible implementation, the NEF may alternatively separately send identification information of all group members to the UE 1, the UE 2, and the UE 3 in S606a, S606b, and S606c. In other words, the NEF may send the identification information of all the group members to one UE in the group, or may send identification information of another group member other than a UE to the UE. This is not limited in this application.

Further, the UDM determines, based on the identification information of the group member, identification information of an SMF serving the group member. For example, the UDM obtains, based on the identifier of the UE 1, the context #1 associated with the PDU session #1, and then obtains the identification information of the SMF 1 from the context #1. Similarly, the UDM obtains the identification information of the SMF 1 from the context #2 based on the identification information of the UE 2, and the UDM obtains the identification information of the SMF 2 from the context #3 based on the identification information of the UE 3. Then, the UDM triggers the SMF 1 and the SMF 2 to establish group communication between the UE 1, the UE 2, and the UE 3.

In an implementation (denoted as a manner A), the UDM separately sends a notification message to the SMF 1 and the SMF 2, to trigger establishment of group communication. The following provides an example for description with reference to S607a and S607b.

In S607a, the UDM sends a notification message #1 to the SMF 1.

In S607b, the UDM sends a notification message #2 to the SMF 2.

For example, the notification message #1 includes the identification information of the UE 1, the identification information of the UE 2, and the identification information of the SMF 2, and the notification message #2 includes the identification information of the UE 2 and the identification information of the SMF 1. Optionally, the notification message #1 and the notification message #2 may further include the identification information of the group.

It should be understood that the UDM may respectively send the notification message #1 and the notification message #2 to the SMF 1 and the SMF 2. Alternatively, the UDM may first send the notification message #1, the notification message #2, and an identifier of the SMF 2 to the SMF 1, and then the SMF 1 sends the notification message #2 to the SMF 2. This is not limited in this application.

In another implementation (denoted as a manner B), the UDM sends a notification message to either of the SMF 1 and the SMF 2, to trigger establishment of group communication. The following provides an example for description with reference to S607a.

In S607a, the UDM sends a notification message #1 to the SMF 1.

For example, the notification message #1 includes the identification information of the UE 1, the identification information of the UE 2, the identification information of the UE 3, and the identification information of the SMF 2.

In S608, the SMF 1 configures a forwarding rule #1 for the UPF 1 and the UPF 2.

For example, after receiving the notification message #1 from the UDM, the SMF 1 determines that the UE 1 is served by the UPF 1 and the UE 2 is served by the UPF 2, where both the UPF 1 and the UPF 2 are served by the SMF 1. The SMF 1 configures the forwarding rule #1 on the UPF 1 and the UPF 2, where the forwarding rule #1 is used for 5G VN communication between the UE 1 and the UE 2.

In a first case, if the UPF 1 is the same as the UPF 2, that is, the UE 1 and the UE 2 are served by a same UPF, the SMF 1 configures the forwarding rule #1 on the UPF 1, so that communication between the UE 1 and the UE 2 supports a local switch (Local switch) manner. It should be understood that in this case, the UPF 1 is equivalent to the UPF 2. For ease of description, the UPF 1 is used as an example for description herein.

For example, a RAN corresponding to the UE 1 and a RAN corresponding to the UE 2 are respectively a RAN 1 and a RAN 2, a tunnel between the UPF 1 and the RAN 1 is an N3 tunnel #1, and a tunnel between the UPF 1 and the RAN 2 is an N3 tunnel #2. The SMF 1 establishes or configures the forwarding rule #1 on the UPF 1, where the forwarding rule #1 includes: sending a data packet whose destination address is the UE 1 to the RAN 1 via the N3 tunnel #1; and sending a data packet whose destination address is the UE 2 to the RAN 2 via the N3 tunnel #2.

In a second case, if the UPF 1 is different from the UPF 2, that is, the UE 1 and the UE 2 are served by different UPFs, the SMF 1 configures a forwarding rule #1 on the UPF 1 and a forwarding rule #1 on the UPF 2, so that communication between the UE 1 and the UE 2 supports an N19 tunnel forwarding manner. It should be understood that the forwarding rule #1 configured by the SMF 1 on the UPF 1 is different from that configured by the SMF 1 on the UPF 2.

For example, the SMF 1 first establishes an N19 tunnel between the UPF 1 and the UPF 2. Specifically, for example, the SMF 1 or the UPF 1 allocates tunnel information of the UPF 1, and notifies the UPF 2 of the tunnel information of the UPF 1; and the SMF 1 or the UPF 2 allocates tunnel information of the UPF 2, and notifies the UPF 1 of the tunnel information of the UPF 2. Then, the SMF 1 establishes or configures the forwarding rule #1 on the UPF 1, where the forwarding rule #1 configured on the UPF 1 includes sending, to the UPF 2 via the N19 tunnel between the UPF 1 and the UPF 2, a data packet whose destination address is a UE (for example, the UE 2) served by the UPF 2. The SMF 1 establishes or configures the forwarding rule #1 on the UPF 2, where the forwarding rule #1 configured on the UPF 2 includes first sending, to the UPF 1 via the N9 tunnel between the UPF 1 and the UPF 2, a data packet whose destination address is a UE (for example, the UE 1) served by the UPF 1.

In addition, the SMF 1 determines that the UE 3 is not served by the SMF 1, may determine, based on the notification message #1, that the UE 3 is served by an SMF 3, and determines that a request message needs to be sent to the SMF 2, to establish a communication path between the UE 1/UE 2 and the UE 3. Optionally, the SMF 1 or the UPF 1 allocates tunnel information #2 of the UPF 1, where the tunnel information #2 of the UPF 1 may be different from tunnel information of the N19 tunnel between the UPF 1 and the UPF 2. Similarly, the SMF 1 or the UPF 2 allocates tunnel information #2 of the UPF 2. The tunnel information #2 of the UPF 1 is used to establish a tunnel between the UPF 1 and the UPF 3. The tunnel information #2 of the UPF 2 is used to establish a tunnel between the UPF 2 and the UPF 3. If the tunnel information #2 of the UPF 1 and the tunnel information #2 of the UPF 2 are allocated, the tunnel information of the UPF 1 in S610 is the tunnel information #2 of the UPF 1, and similarly, the tunnel information of the UPF 2 in S610 is the tunnel information #2 of the UPF 2.

In S609, the SMF 1 sends the request message to the SMF 2. Correspondingly, the SMF 2 receives the request message from the SMF 1.

For example, the SMF 1 first determines the identification information of the SMF 2.

The SMF 1 sends the request message to the SMF 2 in S609. The request message may be a session establishment request message. For example, the request message is used to request to establish a session between the SMF 1 and the SMF 2. Alternatively, the request message may be a tunnel establishment request message, and the tunnel establishment request message is used to request to establish a tunnel between a UPF controlled by the SMF 1 and a UPF controlled by the SMF 2.

Corresponding to the first case in S608a, if the UPF 1 is the same as the UPF 2, the request message may further include the tunnel information of the UPF 1, the identification information of the UE 1 (for example, an IP address of the UE 1), and the identification information of the UE 2 (for example, an IP address of the UE 2), the request message is used to request to establish the N19 tunnel between the UPF 1 and the UPF 2.

Corresponding to the second case in S608a, if the UPF 1 is different from the UPF 2, the request message includes the tunnel information of the UPF 1, the tunnel information of the UPF 2, the identification information of the UE 1, and the identification information of the UE 2, where the tunnel information of the UPF 1 is associated with the identification information of the UE 1, and the tunnel information of the UPF 2 is associated with the identification information of the UE 2. The request message is used to request to establish an N19 tunnel between the UPF 1 and the UPF 3 and the tunnel between the UPF 2 and the UPF 3.

Optionally, the request message may further include the identification information of the SMF 1.

It should be understood that corresponding to the second case, the request message may further carry the identification information of the UE 3.

A name of the request message is not limited in this application. For example, the request message may be a session establishment request message or a tunnel establishment request message. This is not limited in this application. The request message is used to request to establish the session between the SMF 1 and the SMF 2 that correspond to the group. Alternatively, the request message is used to request to establish an N19 tunnel between the UPF 1 (and/or the UPF 2) and the UPF managed by the SMF 2. Alternatively, the request message is used to request to obtain tunnel information of the UPF managed by the SMF 2. It should be understood that the tunnel information herein is N19 tunnel information. The identification information of the SMF 1 may be a context ID or a callback URI of the SMF 1.

In S610, the SMF 2 configures a forwarding rule #2 on the UPF 3.

For example, the SMF 2 configures the forwarding rule #2 on the UPF 3 after receiving the request message from the SMF 1. For example, the SMF 2 may configure the forwarding rule #2 on the UPF 3 by using an N4 session modification/update request message.

Corresponding to the first case in S608a, if the UPF 1 is the same as the UPF 2, the SMF 2 sends the tunnel information of the UPF 1, the identification information of the UE 1 (for example, address information of the UE 1), and the identification information of the UE 2 (for example, address information of the UE 2) to the UPF 3 (for example, the information may be carried in the N4 session modification/update request message), and configures the forwarding rule #2 on the UPF 3, where the forwarding rule #2 includes: encapsulating the N19 tunnel information of the UPF 1 into a data packet whose destination address is the UE 1 or the UE 2, and sending the data packet to the UPF 1, or in other words, sending the data packet whose destination address is the UE 1 or the UE 2 to the UPF 1 via the N19 tunnel between the UPF 1 and the UPF 3.

Corresponding to the second case in S608a, if the UPF 1 is different from the UPF 2, the SMF 2 sends the tunnel information of the UPF 1, the tunnel information of the UPF 2, address information of the UE 1, and address information of the UE 2 to the UPF 3 (for example, the information may be carried in the N4 session modification/update request message), where the tunnel information of the UPF 1 is associated with the address information of the UE 1, and the tunnel information of the UPF 2 is associated with the address information of the UE 2. The SMF 2 configures the forwarding rule #2 on the UPF 3, where the forwarding rule #2 includes: encapsulating the N19 tunnel information of the UPF 1 into a data packet whose destination address is the UE 1, and sending the data packet to the UPF 1; and encapsulating the N19 tunnel information of the UPF 2 into a data packet whose destination address is the UE 2, and sending the data packet to the UPF 2; or in other words, sending the data packet whose destination address is the UE 1 to the UPF 1 via the N19 tunnel between the UPF 1 and the UPF 3, and sending the data packet whose destination address is the UE 2 to the UPF 2 via an N19 tunnel between the UPF 2 and the UPF 3.

In S611, the SMF 2 sends a response message to the SMF 1. Correspondingly, the SMF 1 receives the response message from the SMF 2.

For example, the SMF 2 sends the response message to the SMF 1 after completing configuration of a forwarding rule for the UPF 3, where the response message includes tunnel information of the UPF 3 and the identification information of the UE 3.

In S612, the SMF 1 configures a forwarding rule #3 on the UPF 1 and the UPF 2.

For example, the SMF 1 separately configures the forwarding rule #3 on the UPF 1 and the UPF 2 after receiving the response message from the SMF 2, where the forwarding rule #3 includes: encapsulating the N19 tunnel information of the UPF 3 into a data packet whose destination address is the UE 3, and sending the data packet to the UPF 3.

Based on the foregoing solution, group communication between three UEs may be established. Particularly, the three UEs herein may be considered as a group dynamically created. Specifically, in the foregoing solution, when a group is dynamically created, the UDM may send a message to notify an SMF corresponding to a group member, and the SMF configures a forwarding rule for a UPF serving the group member, so that group members can communicate with each other.

For example, FIG. 6 is a diagram of a communication architecture established according to the method 600. In the communication architecture shown in FIG. 6, the SMF 1 is a network element serving for sessions of the UE 1 and the UE 2, and the SMF 2 is a network element serving for a session of the UE 3. A UPF (that is, the UPF 1) corresponding to the UE 1 may be the same as or different from a UPF (that is, the UPF 2) corresponding to the UE 2.

When the UPF 1 is the same as the UPF 2, a forwarding rule configured by the SMF 1 on the UPF 1 includes: sending a data packet whose destination address is the UE 1 to the RAN 1 via the N3 tunnel #1; sending a data packet whose destination address is the UE 2 to the RAN 2 via the N3 tunnel #2; and encapsulating the N19 tunnel information of the UPF 3 into a data packet whose destination address is the UE 3, and sending the data packet to the UPF 3. A forwarding rule configured by the SMF 2 on the UPF 3 includes: encapsulating the N19 tunnel information of the UPF 1 into a data packet whose destination address is the UE 1 or the UE 2, and sending the data packet to the UPF 1.

In this case, a data exchange path between the UE 1 and the UE 2 is UE 1-RAN 1-UPF 1-RAN 2-UPF 2, a data exchange path between the UE 1 and the UE 3 is UE 1-RAN 1-UPF 1-UPF 3-RAN 3-UE 3, and a data exchange path between the UE 2 and the UE 3 is UE 2-RAN 2-UPF 1-UPF 3-RAN 3-UE 3.

When the UPF 1 is different from the UPF 2, a forwarding rule configured by the SMF 1 on the UPF 1 includes: sending a data packet whose destination address is the UE 2 to the UPF 2 via the N19 tunnel between the UPF 1 and the UPF 2; and encapsulating the N19 tunnel information of the UPF 3 into a data packet whose destination address is the UE 3, and sending the data packet to the UPF 3. A forwarding rule configured by the SMF 1 on the UPF 2 includes: sending a data packet whose destination address is the UE 1 to the UPF 1 via the N9 tunnel between the UPF 1 and the UPF 2; and encapsulating the N19 tunnel information of the UPF 3 into a data packet whose destination address is the UE 3, and sending the data packet to the UPF 3. A forwarding rule configured by the SMF 2 on the UPF 3 includes: encapsulating the N19 tunnel information of the UPF 1 into a data packet whose destination address is the UE 1, and sending the data packet to the UPF 1; and encapsulating the N19 tunnel information of the UPF 2 into a data packet whose destination address is the UE 2, and sending the data packet to the UPF 2.

In this case, a data exchange path between the UE 1 and the UE 2 is UE 1-RAN 1-UPF 1-UPF 2-RAN 2-UE 2, a data exchange path between the UE 1 and the UE 3 is UE 1-RAN 1-UPF 1-UPF 3-RAN 3-UE 3, and a data exchange path between the UE 2 and the UE 3 is UE 2-RAN 2-UPF 2-UPF 3-RAN 3-UE 3.

Therefore, in the foregoing solution, UEs in a group served by a same SMF can communicate with each other, and UEs in the group served by different SMFs can also communicate with each other.

FIG. 8A and FIG. 8B are an example flowchart of the method 800 according to an embodiment of this application. The method 800 includes the following steps.

It should be understood that S801 to S805 in the method 800 are similar to S601 to S605 in the method 600, and related explanations and descriptions may be reused. For brevity, details are not described herein again.

The following describes two implementations provided in this embodiment of this application with reference to examples.

### Solution a:

In S806a, a NEF sends identification information of a group to a UE 1. Optionally, the NEF further sends identification information of another UE to the UE 1.

For example, the NEF determines, based on an identifier of the UE 1, that an SMF serving the UE 1 is an SMF 1, or determines that a PCF serving the UE 1 is a PCF 1. Then, the NEF sends the identification information of the group to the UE 1 via the SMF 1 or the PCF 1. Alternatively, the NEF sends the identification information of the group to an AF, and then the AF sends the identification information of the group to the UE 1.

The identification information of the group may be an external group identifier, or may be an internal group identifier. Generally, if the identification information of the group is sent to the UE 1 via the SMF 1 or the PCF 1, the identification information of the group is the internal group identifier; or if the identification information of the group is sent to the UE 1 via the AF, the identification information of the group is the external group identifier.

Similarly, in S806b, the NEF sends the identification information of the group to a UE 2. Optionally, the NEF further sends identification information of another UE to the UE 2.

Similarly, in S806c, the NEF sends the identification information of the group to a UE 3. Optionally, the NEF further sends identification information of another UE to the UE 3.

In S807, the UE 1 sends a session modification request message to the SMF 1. Correspondingly, the SMF 1 receives the session modification request message from the UE 1. It should be understood that before the UE 1 sends the session modification request message, the UE 1 has requested to establish a first session, where the SMF 1 serves the first session.

For example, the session modification request message includes group communication request indication information, and the indication information may be the identification information of the group. The session modification request message is used by the UE 1 to request to join the group. Alternatively, the request message is used by the UE 1 to request to perform group communication with another member.

Optionally, the request message may further include identification information of one or more other UEs, for example, an identifier of the UE 2, and may indicate that the UE 1 requests to perform group communication with the UE 2, where the group communication may be 5G LAN communication.

It should be understood that the UE 1 may send the request message to the SMF 1 after receiving the identification information of the group or an identifier of the another UE from the NEF in S806a, or may send the session modification request message after the UE 1 has a communication requirement. This is not limited in this application.

It should also be understood that the UE 1 may directly send the session modification request message to the SMF 1. Alternatively, the UE 1 may first send the session modification request message to the AF, and then the AF sends the session modification request message to the SMF 1. It should be noted that the AF may send the session modification request message to the SMF 1 via the NEF or the PCF 1 (the PCF serving the UE 1). A specific manner is not limited in this application.

In S808, the SMF 1 configures a forwarding rule #1 for a UPF 1 and a UPF 2.

For example, after receiving the request message from the UE 1, the SMF 1 checks whether there is another group member served by the SMF 1. If the request message includes a group identifier, the SMF 1 determines another group member further included in the corresponding group, and further, the SMF 1 may determine a group member served by the SMF 1; or if the request message includes the identifier of the another UE, the SMF 1 determines an SMF serving the another UE.

In an implementation, the SMF 1 may query, by using the identification information of the group, UDM for identification information of a group member other than the UE 1 in the group. Then, the SMF 1 checks whether there is a specific group member served by the SMF 1 in the group member.

When the SMF 1 determines that the UE 2 is a group member, the SMF 1 configures the forwarding rule #1 for the UPF 1 and the UPF 2. For a specific configuration process, refer to S608a in the method 600. Details are not described herein again.

In S809, the SMF 1 sends a request message to an SMF 2. Correspondingly, the SMF 2 receives the request message from the SMF 1.

In a possible implementation, the SMF 1 may query, via the UDM based on the identification information of the group, another SMF serving the group member, that is, the SMF 2. Then, the SMF 1 sends the request message to the SMF 2. In this implementation, S809 is similar to S609 in the method 600. Therefore, details are not described again.

In another possible implementation, the SMF 1 may initiate a tunnel establishment procedure based on a notification message of the UDM. The following provides descriptions with reference to an example.

The SMF 1 sends a registration request message to the UDM. Correspondingly, the UDM receives the registration request message from the SMF 1. For example, after the SMF 1 completes configuration of the forwarding rule #1 on the UPF 1 and the UPF 2 based on a request of the UE 1, that is, after S808, the SMF 1 sends the registration request message to the UDM, where the registration request message includes the identification information of the group and identification information of the SMF 1. Correspondingly, the UDM records (or stores) a correspondence between the identification information of the group and the identification information of the SMF 1 after receiving the registration request message from the SMF 1. The identification information of the SMF 1 herein may be, for example, an FQDN, an address, a URI (for example, a notification URI or a callback URI), or an endpoint (endpoint) number.

It should be noted that the UDM herein may alternatively be replaced with another network element, for example, a UDR, the NEF, or another network element, for example, a group management network element. This is not limited in this application.

The SMF 1 sends a subscription message to the UDM. For example, the SMF 1 may send the subscription message to the UDM, where the subscription message is used to subscribe to a group information change notification. After the UDM receives the subscription message, based on the subscription message, when a new SMF is registered with the group or a specific SMF is deregistered from the group, the UDM may notify the SMF 1.

The UE 3 requests to join the group. For example, the UE 3 may send a request message to the SMF 2, to request to join the group, or request to communicate with another member in the group. A specific process is similar to that in S807, and details are not described herein again. Then, the SMF 2 checks whether there is another group member served by the SMF 2. If there is no other group member served by the SMF 2, the SMF 2 directly sends a registration message to the UDM, where the registration message includes the identification information of the group and an identifier of the SMF 2. A specific process is similar to that in S810, and details are not described herein again. The SMF 2 may further send a subscription request message to the UDM. A specific process is similar to that in S811, and details are not described herein again.

The UDM sends the notification message to the SMF 1. For example, when the UDM receives the registration message from the SMF 2, the UDM sends the notification message to the SMF 1 based on the subscription request message of the SMF 1, where the notification message includes the identifier of the SMF 2. The notification message indicates that the SMF 2 has been registered with the group.

Further, the SMF 1 receives the notification message from the UDM, and the SMF 1 sends the request message to the SMF 2 in S809 based on the notification message.

In S810, the SMF 2 configures a forwarding rule #2 on a UPF 3.

In S811, the SMF 2 sends a response message to the SMF 1.

In S812, the SMF 1 configures a forwarding rule #3 on the UPF 1 and the UPF 2.

It should be understood that S810 to S812 are similar to S610 to S612 in the method 600. For brevity, details are not described again.

Optionally, in S813, the SMF 1 sends the response message to the UE 1.

For example, the response message is used to respond to the request message in S807. The response message indicates that the UE 1 successfully joins the group. Alternatively, the response message indicates that communication between the UE 1 and another group member is successfully established. It should be understood that S813 may alternatively be performed after S808. This is not limited in this application.

It should be noted that if the UE 1 first sends the request message to the AF in S807, the SMF 1 may first notify the AF after completing S808, and the AF sends the response message to the SMF 1.

In S814, the SMF 1 sends identification information of the UE 3 to the UE 1. In S815, the SMF 1 sends the identification information of the UE 3 to the UE 2.

For example, the SMF 1 may send, to the UE 1 and the UE 2, identification information of a group member (that is, the UE 3) that newly joins the group, and the UE 1 and the UE 2 may perform group communication with the UE 3 based on the identification information of the UE 3.

It should be understood that S818 and S819 may be performed at any moment after S815. This is not limited in this application.

In S816, the SMF 2 sends identification information of the UE 1 and identification information of the UE 2 to the UE 3.

For example, the SMF 2 may send, to the UE 3, identification information of a group member (that is, the UE 1 and the UE 2) that previously joins the group, and the UE 3 may perform group communication with the UE 1 and the UE 2 based on the identification information of the UE 1 and the identification information of the UE 2.

It should be understood that S816 may be performed at any moment after S809. This is not limited in this application.

### Solution b:

In S806a, a NEF sends identification information of a UE 2 and identification information of a UE 3 to a UE 1.

For example, the NEF sends the identification information of the UE 2 and the identification information of the UE 3 to the UE 1 via an SMF 1 or a PCF 1. Alternatively, the NEF sends the identification information of the UE 2 and the identification information of the UE 3 to the UE 1 via an AF.

Similarly, in S806b, the NEF sends identification information of the UE 1 and the identification information of the UE 3 to the UE 2.

Similarly, in S806c, the NEF sends the identification information of the UE 1 and the identification information of the UE 2 to the UE 3.

In S807, the UE 1 sends a session modification request message to the SMF 1.

For example, the session modification request message includes the identification information of the UE 2 and the identification information of the UE 3. The session modification request message is used to request to perform group communication between the UE 1 and both the UE 2 and the UE 3.

In S808, the SMF 1 configures a forwarding rule #1 on the UPF 1.

For example, after receiving the session modification request message from the UE 1, the SMF 1 checks whether the UE 2 and the UE 3 are served by the SMF 1. When the SMF 1 determines that the UE 2 is a group member, the SMF 1 configures the forwarding rule #1 for the UPF 1 and a UPF 2. For a specific configuration process, refer to S608a in the method 600. Details are not described herein again.

In S809, the SMF 1 sends a request message to an SMF 2.

For example, the SMF 1 determines that the UE 3 is not served by the SMF 1. In this case, the SMF 1 determines, via UDM based on the identification information of the UE 3, that an SMF serving the UE 3 is the SMF 2, and the SMF 1 sends the request message to the SMF 2. In this implementation, S809 is similar to S609 in the method 600. Therefore, details are not described again.

S810 to S812 are similar to S610 to S612 in the method 600, and details are not described herein again.

S813 to S816 are similar to S813 to S816 in Solution a, and details are not described herein again.

Corresponding to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

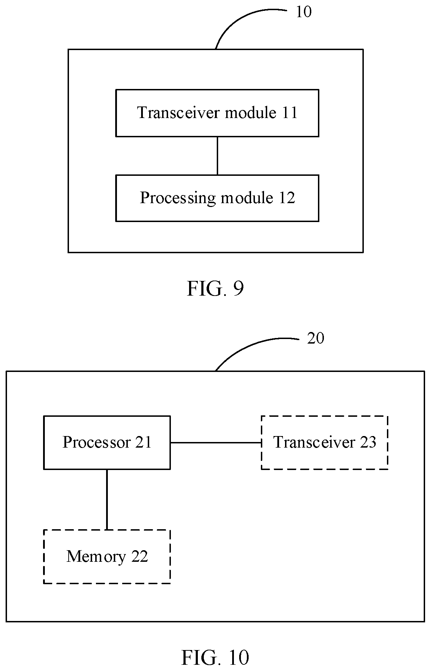

FIG. 9 is a schematic block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. Alternatively, the transceiver module 11 is configured to perform operations related to receiving and sending, and the processing module 12 is configured to perform operations other than receiving and sending. The transceiver module 11 may also be referred to as a communication interface or a communication unit.

Optionally, the apparatus 10 may further include a storage module. The storage module may be configured to store instructions and/or data. The processing module 12 may read the instructions and/or the data in the storage module, so that the apparatus implements actions of a device or a network element in the foregoing method embodiments.

In a first design, the apparatus 10 may correspond to a network device, or a component (for example, a chip) of a network device in the foregoing method embodiments, for example, the group management network element (for example, the UDM) or a session management network element (for example, the SMF).

The apparatus 10 may implement steps or procedures corresponding to the group management network element (or the UDM) in the foregoing method embodiments. The transceiver module 11 may be configured to perform receiving and sending-related operations of the group management network element (or the UDM) in the foregoing method embodiments. The processing module 12 may be configured to perform processing-related operations of the group management network element (or the UDM) in the foregoing method embodiments.

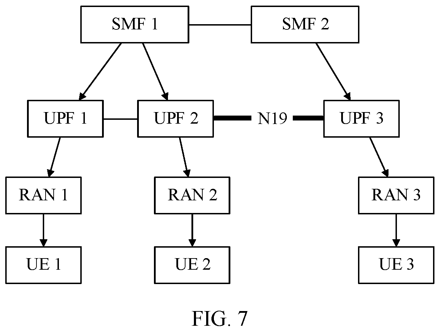

For example, the apparatus 10 may correspond to the group management network element in the method 400 or the method 500 or the UDM in the method 600 and the method 800 in embodiments of this application. The apparatus 10 may include modules configured to perform the methods performed by the group management network element (or the UDM) in FIG. 4 to FIG. 8A and FIG. 8B. In addition, the modules in the apparatus 10 and the foregoing other operations and/or functions are respectively used to implement corresponding procedures of the methods shown in FIG. 4 to FIG. 8A and FIG. 8B.

In a second design, the apparatus 10 may correspond to a terminal device (or a UE) in the foregoing method embodiments.

For example, the apparatus 10 may correspond to a terminal device in the method 400 or the method 500 or a UE in the method 600 and the method 800 in embodiments of this application. The apparatus 10 may include modules configured to perform the methods performed by the terminal device (or the UE) in FIG. 4 to FIG. 8A and FIG. 8B. In addition, the modules in the apparatus 10 and the foregoing other operations and/or functions are respectively used to implement corresponding procedures of the methods shown in FIG. 4 to FIG. 8A and FIG. 8B.

It should be understood that a specific process in which the modules perform the foregoing corresponding steps is described in detail in the foregoing method embodiments. For brevity, details are not described herein again.

It should also be understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the network device (for example, the group management network element or the session management network element) or the terminal device in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform sending and receiving operations and a related processing operation in the method embodiments.

In addition, the transceiver module 11 may alternatively be a transceiver circuit (for example, the transceiver circuit may include a receiver circuit and a transmitter circuit), and the processing module may be a processing circuit.

It should be noted that the apparatus in FIG. 9 may be the network element or the device in the foregoing embodiments, or may be a chip or a chip system, for example, a system on chip (system on chip, SoC). The transceiver module may be an input/output circuit or a communication interface. The processing module is a processor, a microprocessor, or an integrated circuit integrated on the chip. This is not limited herein.

According to the foregoing methods, FIG. 10 is a diagram of a communication apparatus 20 according to an embodiment of this application. In a possible design, the apparatus 20 may correspond to the group management network element (for example, the UDM) or a session management network element (for example, the SMF) in the foregoing method embodiments. In another possible design, the apparatus 20 may correspond to a terminal device (for example, a UE) in the foregoing method embodiments.

The apparatus 20 may include a processor 21 (that is, an example of a processing module) and a memory 22. The memory 22 is configured to store instructions. The processor 21 is configured to execute the instructions stored in the memory 22, so that the apparatus 20 implements the steps performed by the terminal device or a network device in the methods corresponding to FIG. 4 to FIG. 8A and FIG. 8B. The network device may be the session management network element, the group management network element, the SMF, the UDM, or the like in the method 400 to the method 800.

Further, the apparatus 20 may further include an input port 23 (that is, an example of a transceiver module) and an output port 24 (that is, another example of the transceiver module). Further, the processor 21, the memory 22, the input port 23, and the output port 24 may communicate with each other via an internal connection path, to transmit a control signal and/or a data signal. The memory 22 is configured to store a computer program. The processor 21 may be configured to invoke the computer program from the memory 22 and run the computer program, to control the input port 23 to receive a signal, and control the output port 24 to send a signal, to complete the steps performed by the terminal device or the network device in the foregoing methods. The memory 22 may be integrated into the processor 21, or may be disposed separately from the processor 21.

Optionally, if the communication apparatus 20 is a communication device, the input port 23 is a receiver, and the output port 24 is a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 20 is a chip or a circuit, the input port 23 is an input interface, and the output port 24 is an output interface.

In an implementation, it may be considered that functions of the input port 23 and the output port 24 are implemented by a transceiver circuit or a dedicated transceiver chip. It may be considered that the processor 21 is implemented by a dedicated processing chip, a processing circuit, a processor, or a general-purpose chip.

In another implementation, it may be considered that the communication device provided in this embodiment of this application is implemented by using a general-purpose computer. In other words, program code for implementing functions of the processor 21, the input port 23, and the output port 24 is stored in the memory 22, and the general-purpose processor implements the functions of the processor 21, the input port 23, and the output port 24 by executing the code in the memory 22.

For concepts, explanations, detailed descriptions, and other steps of the apparatus 20 that are related to the technical solutions provided in embodiments of this application, refer to the descriptions of the content in the foregoing methods or other embodiments. Details are not described herein again.

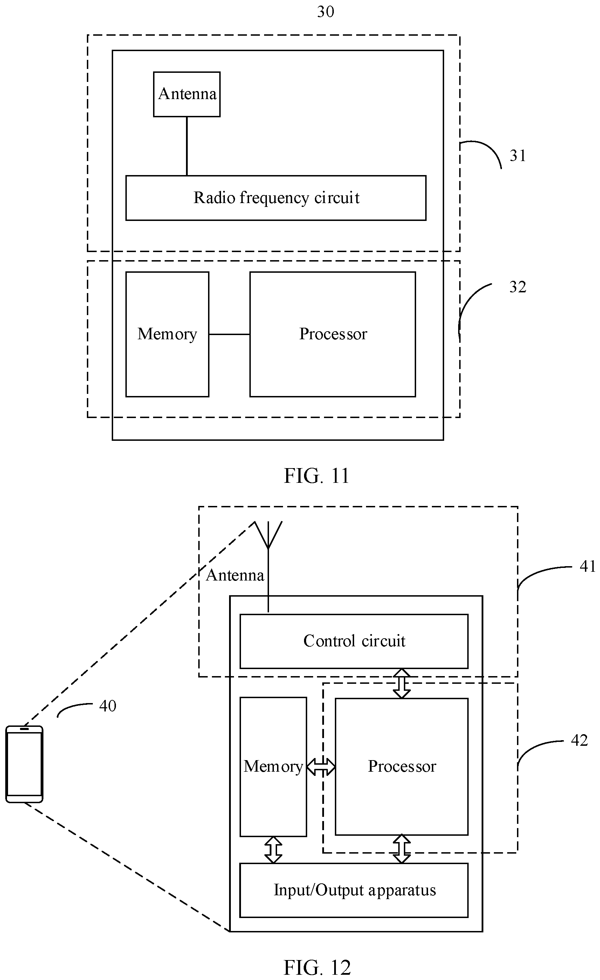

FIG. 11 is a simplified diagram of a structure of a network device 30. The network device includes a part 31 and a part 32. The part 31 is mainly configured to transmit and receive a radio frequency signal and convert a radio frequency signal and a baseband signal. The part 32 is mainly configured to perform baseband processing, control the network device, and the like. The part 31 may be generally referred to as a transceiver module, a transceiver, a transceiver circuit, a transceiver machine, or the like. The part 32 is generally a control center of the network device, may be generally referred to as a processing module, and is configured to control the network device to perform a processing operation on a network device side in the foregoing method embodiments.

The transceiver module in the part 31 may also be referred to as a transceiver, a transceiver machine, or the like, and includes an antenna and a radio frequency circuit. The radio frequency circuit is mainly configured to perform radio frequency processing. For example, a component configured to implement a receiving function in the part 31 may be considered as a receiving module, and a component configured to implement a sending function may be considered as a sending module. In other words, the part 31 includes the receiving module and the sending module. The receiving module may also be referred to as a receiver, a receiver machine, a receiver circuit, or the like, and the sending module may be referred to as a transmitter, a transmitter machine, a transmitter circuit, or the like.

The part 32 may include one or more boards, and each board may include one or more processors and one or more memories. The processor is configured to read and execute a program in the memory to implement a baseband processing function and control the network device. If there are a plurality of boards, the boards may be connected to each other, to enhance a processing capability. In an optional implementation, a plurality of boards may share one or more processors, a plurality of boards share one or more memories, or a plurality of boards share one or more processors at the same time.

For example, in an implementation, the network device shown in FIG. 11 may be any network device shown in the methods shown in FIG. 4 to FIG. 8A and FIG. 8B, for example, the mobility management network element.

The transceiver module in the part 31 is configured to perform receiving and sending-related steps of any network device in the methods shown in FIG. 4 to FIG. 8A and FIG. 8B. The part 32 is configured to perform processing-related steps of any network device in the methods shown in FIG. 3 to FIG. 8A and FIG. 8B.

It should be understood that FIG. 11 is merely an example rather than a limitation, and the foregoing network device including the transceiver module and the processing module may not depend on the structure shown in FIG. 11.

When the apparatus 40 is a chip, the chip includes a transceiver module and a processing module. The transceiver module may be an input/output circuit or a communication interface. The processing module is a processor, a microprocessor, or an integrated circuit integrated on the chip.

FIG. 12 is a diagram of a structure of a terminal device 40 according to this application. For ease of description, FIG. 12 shows only main components of the communication apparatus. As shown in FIG. 12, the terminal device 40 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device in performing the actions described in the indication method for transmitting a precoding matrix in the foregoing embodiments. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor may read a software program in a storage unit, explain and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data.

A person skilled in the art may understand that for ease of description, FIG. 12 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and the components of the terminal device may be connected via various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

As shown in FIG. 12, the terminal device 40 includes a transceiver module 41 and a processing module 42. The transceiver module may also be referred to as a transceiver, a transceiver machine, a transceiver apparatus, or the like. Optionally, a component configured to implement a receiving function in the transceiver module 41 may be considered as a receiving unit, and a component configured to implement a sending function in the transceiver module 41 may be considered as a sending unit. In other words, the transceiver module 41 includes the receiving unit and the sending unit. For example, the receiving unit may also be referred to as a receiver, a receive machine, or a receiving circuit, and the sending unit may also be referred to as a transmitter, a transmit machine, or a transmitting circuit.

The terminal device shown in FIG. 12 may perform the actions performed by the terminal device in the methods shown in FIG. 4 to FIG. 8A and FIG. 8B. To avoid repetition, detailed descriptions thereof are omitted herein.

An embodiment of this application further provides a computer-readable storage medium. The computer-readable storage medium stores computer instructions used to implement the method performed by a network device in the foregoing method embodiments.

For example, when the computer program is executed by a computer, the computer can implement the method performed by the network device in the foregoing method embodiments.

An embodiment of this application further provides a computer program product including instructions. When the instructions are executed by a computer, the computer implements the method performed by a first device or the method performed by a second device in the foregoing method embodiments.

An embodiment of this application further provides a communication system. The communication system includes the network device in the foregoing embodiments.

For explanations and beneficial effects of related content in any one of the foregoing provided apparatuses, refer to the corresponding method embodiments provided above. Details are not described herein again.

In embodiments of this application, the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by a network device, or a functional module in a network device that can invoke and execute a program.

Various aspects or features of this application may be implemented as methods, apparatuses, or products using standard programming and/or engineering techniques. As used herein, the term "product" may encompass a computer program accessible from any computer-readable device, carrier, or medium. For example, the computer-readable medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive).

Various storage media described herein may represent one or more devices and/or other machine-readable media for storing information. The term "machine-readable medium" may include but is not limited to a radio channel and various other media capable of storing, containing, and/or carrying instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may also be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include a plurality of forms below: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should also be noted that the memory described herein is intended to include but is not limited to these and any other suitable type of memory.

A person of ordinary skill in the art may be aware that the units and steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

It may be clearly understood by a person skilled in the art that for the purpose of convenient and brief description, for a detailed working process of the apparatuses and units described above, reference may be made to a corresponding process in the foregoing method embodiments, and details are not described herein.

In the several embodiments provided in this application, it should be understood that the disclosed apparatus and method may be implemented in other manners. For example, the described apparatus embodiment is merely an example. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, (SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and the specification.

## Claims

1. A communication system, comprising a group management network element, a first session management network element, and a second session management network element, wherein
the group management network element is configured to: receive a group communication request message, wherein the group communication request message comprises identification information of a first terminal device and identification information of a second terminal device; determine the first session management network element and the second session management network element in response to the group communication request message; and send a first notification message to the first session management network element, and send a second notification message to the second session management network element, wherein the first notification message comprises the identification information of the first terminal device and identification information of the second session management network element, the second notification message comprises the identification information of the second terminal device and identification information of the first session management network element, the first session management network element serves a first session that has been established by the first terminal device, and the second session management network element serves a second session that has been established by the second terminal device;
the first session management network element is configured to: receive the first notification message; and send a request message to the second session management network element based on the identification information of the second session management network element, wherein the request message comprises tunnel information of a first user plane network element, the identification information of the first terminal device, and the identification information of the second terminal device, and the first user plane network element serves the first session;
the second session management network element is configured to: receive the second notification message from the group management network element and the request message from the first session management network element; configure a first forwarding rule for a second user plane network element based on the tunnel information of the first user plane network element and the identification information of the first terminal device, wherein the first forwarding rule is used to send a data packet whose destination address points to the first terminal device to the first user plane network element; and send a response message to the first session management network element, wherein the response message comprises tunnel information of the second user plane network element and the identification information of the second terminal device, and the second user plane network element serves the second session; and
the first session management network element is further configured to: receive the response message from the second session management network element; and configure a second forwarding rule for the first user plane network element based on the tunnel information of the second user plane network element and the identification information of the second terminal device, wherein the second forwarding rule is used to send a data packet whose destination address points to the second terminal device to the first user plane network element.

2. The system according to claim 1, wherein the group communication request message further comprises indication information, and the indication information indicates to establish group communication between the first terminal device and the second terminal device.

3. The system according to claim 1 or 2, wherein that the group management network element is configured to determine the first session management network element and the second session management network element in response to the group communication request message comprises:
the group management network element is configured to: obtain, based on the identification information of the first terminal device, a first context associated with the first session, and obtain, based on the identification information of the second terminal device, a second context associated with the second session, wherein the first context comprises the identification information of the first session management network element, and the second context comprises the identification information of the second session management network element.

4. The system according to any one of claims 1 to 3, wherein
the first session management network element is further configured to send a first registration message to the group management network element, wherein the first registration message comprises the identification information of the first terminal device, the identification information of the first session management network element, and identification information of the first session;
the second session management network element is further configured to send a second registration message to the group management network element, wherein the second registration message comprises the identification information of the second terminal device, the identification information of the second session management network element, and identification information of the second session; and
the group management network element is further configured to: receive the first registration message from the first session management network element, and receive the second registration message from the second session management network element.

5. The system according to any one of claims 1 to 4, wherein that the group management network element is configured to receive a group communication request message comprises:
the group management network element is configured to receive the group communication request message from a network exposure function network element.

6. A communication system, comprising a group management network element and a first session management network element, wherein
the group management network element is configured to: receive a group communication request message, wherein the group communication request message comprises identification information of a first terminal device and identification information of a second terminal device; determine the first session management network element in response to the group communication request message; and send a fourth notification message to the first session management network element, wherein the fourth notification message comprises the identification information of the first terminal device and the identification information of the second terminal device, and the first session management network element serves a first session that has been established by the first terminal device and a second session that has been established by the second terminal device; and
the first session management network element is configured to: receive the fourth notification message; determine a first user plane network element based on the identification information of the first terminal device, and determine a second user plane network element based on the identification information of the second terminal device; and when the first user plane network element is the same as the second user plane network element, configure a third forwarding rule for the first user plane network element, wherein the third forwarding rule is used to send a data packet whose destination address points to the first terminal device to an access network device of the first terminal device, and send a data packet whose destination address points to the second terminal device to an access network device corresponding to the second terminal device; or when the first user plane network element is different from the second user plane network element, configure a fourth forwarding rule for the first user plane network element, and configures a fifth forwarding rule for the second user plane network element, wherein the fourth forwarding rule is used to send a data packet whose destination address points to the second terminal device to the second user plane network element, and the fifth forwarding rule is used to send a data packet whose destination address points to the first terminal device to the first user plane network element; and the first user plane network element serves the first session, and the second user plane network element serves the second session.

7. The system according to claim 6, wherein the group communication request message further comprises indication information, and the indication information indicates to establish group communication between the first terminal device and the second terminal device.

8. The system according to claim 6 or 7, wherein that the group management network element is configured to determine the first session management network element in response to the group communication request message comprises:
the group management network element is configured to: obtain, based on the identification information of the first terminal device, a first context associated with the first session, and obtain, based on the identification information of the second terminal device, a second context associated with the second session, wherein the first context and the second context each comprise identification information of the first session management network element.

9. The system according to any one of claims 6 to 8, wherein
the first session management network element is further configured to: send a first registration message to the group management network element, and send a second registration message to the group management network element, wherein the first registration message comprises the identification information of the first terminal device, the identification information of the first session management network element, and identification information of the first session, and the second registration message comprises the identification information of the second terminal device, the identification information of the first session management network element, and identification information of the second session; and
the group management network element is further configured to receive the first registration message and the second registration message from the first session management network element.

10. The system according to any one of claims 6 to 9, wherein that the group management network element is configured to receive a group communication request message comprises:
the group management network element is configured to receive the group communication request message from a network exposure function network element.

11. A group communication method, comprising:
receiving, by a group management network element, a group communication request message, wherein the group communication request message comprises identification information of a first terminal device and identification information of a second terminal device; and
determining, by the group management network element, a first session management network element and a second session management network element in response to the group communication request message, and triggering the first session management network element and the second session management network element to establish group communication between the first terminal device and the second terminal device, wherein
the first session management network element serves a first session that has been established by the first terminal device, and the second session management network element serves a second session that has been established by the second terminal device.

12. The method according to claim 11, wherein the group communication request message further comprises indication information, and the indication information indicates to establish group communication between the first terminal device and the second terminal device.

13. The method according to claim 11 or 12, wherein the determining, by the group management network element, a first session management network element and a second session management network element comprises:
obtaining, by the group management network element based on the identification information of the first terminal device, a first context associated with the first session, and obtaining, based on the identification information of the second terminal device, a second context associated with the second session, wherein the first context comprises identification information of the first session management network element, and the second context comprises identification information of the second session management network element.

14. The method according to any one of claims 11 to 13, wherein the triggering the first session management network element and the second session management network element to establish group communication between the first terminal device and the second terminal device comprises:
sending, by the group management network element, a first notification message to the first session management network element, and sending a second notification message to the second session management network element, wherein the first notification message comprises the identification information of the first terminal device and the identification information of the second session management network element, and the second notification message comprises the identification information of the second terminal device and the identification information of the first session management network element.

15. The method according to any one of claims 11 to 13, wherein the triggering the first session management network element and the second session management network element to establish group communication between the first terminal device and the second terminal device comprises:
sending, by the group management network element, a third notification message to the first session management network element, wherein the third notification message comprises the identification information of the first terminal device, the identification information of the second terminal device, and the identification information of the second session management network element.

16. The method according to any one of claims 11 to 15, wherein the method further comprises:
receiving, by the group management network element, a first registration message from the first session management network element, wherein the first registration message comprises the identification information of the first terminal device, the identification information of the first session management network element, and identification information of the first session; and
receiving, by the group management network element, a second registration message from the second session management network element, wherein the second registration message comprises the identification information of the second terminal device, the identification information of the second session management network element, and identification information of the second session.

17. The method according to any one of claims 11 to 16, wherein the receiving, by a group management network element, a group communication request message comprises:
receiving, by the group management network element, the group communication request message from a network exposure function network element.

18. A group communication method, comprising:
receiving, by a group management network element, a group communication request message, wherein the group communication request message comprises identification information of a first terminal device and identification information of a second terminal device; and
determining, by the group management network element, a first session management network element in response to the group communication request message, and triggering the first session management network element to establish group communication between the first terminal device and the second terminal device, wherein
the first session management network element serves a first session that has been established by the first terminal device and a second session that has been established by the second terminal device.

19. The method according to claim 18, wherein the group communication request message further comprises indication information, and the indication information indicates to establish group communication between the first terminal device and the second terminal device.

20. The method according to claim 18 or 19, wherein the determining, by the group management network element, a first session management network element comprises:
obtaining, by the group management network element based on the identification information of the first terminal device, a first context associated with the first session, and obtaining, based on the identification information of the second terminal device, a second context associated with the second session, wherein the first context and the second context each comprise identification information of the first session management network element.

21. The method according to any one of claims 18 to 20, wherein the triggering the first session management network element to establish group communication between the first terminal device and the second terminal device comprises:
sending, by the group management network element, a fourth notification message to the first session management network element, wherein the fourth notification message comprises the identification information of the first terminal device and the identification information of the second terminal device.

22. The method according to any one of claims 18 to 21, wherein the method further comprises:
receiving, by the group management network element, a first registration message from the first session management network element, wherein the first registration message comprises the identification information of the first terminal device, the identification information of the first session management network element, and identification information of the first session; and
receiving, by the group management network element, a second registration message from the first session management network element, wherein the second registration message comprises the identification information of the second terminal device, the identification information of the first session management network element, and identification information of the second session.

23. The method according to any one of claims 18 to 22, wherein the receiving, by a group management network element, a group communication request message comprises:
receiving, by the group management network element, the group communication request message from a network exposure function network element.

24. A communication system, wherein the communication system comprises a group management network element, a first session management network element, and a second session management network element;
the group management network element is configured to: receive a group communication request message, wherein the group communication request message comprises identification information of a first terminal device and identification information of a second terminal device; determine the first session management network element and the second session management network element in response to the group communication request message; and send a first notification message to the first session management network element, wherein the first notification message comprises the identification information of the first terminal device, the identification information of the second terminal device, and identification information of the second session management network element, the first session management network element serves a first session that has been established by the first terminal device, and the second session management network element serves a second session that has been established by the second terminal device;
the first session management network element is configured to: receive the first notification message; and send a request message to the second session management network element based on the identification information of the second session management network element, wherein the request message comprises tunnel information of a first user plane network element, the identification information of the first terminal device, and the identification information of the second terminal device, and the first user plane network element serves the first session; the second session management network element is configured to: receive the request message from the first session management network element; configure a first forwarding rule for a second user plane network element based on the tunnel information of the first user plane network element and the identification information of the first terminal device, wherein the first forwarding rule is used to send a data packet whose destination address points to the first terminal device to the first user plane network element; and send a response message to the first session management network element, wherein the response message comprises tunnel information of the second user plane network element, and the second user plane network element serves the second session; and
the first session management network element is further configured to: receive the response message from the second session management network element; and configure a second forwarding rule for the first user plane network element based on the tunnel information of the second user plane network element and the identification information of the second terminal device, wherein the second forwarding rule is used to send a data packet whose destination address points to the second terminal device to the first user plane network element.

25. The system according to claim 24, wherein the group communication request message further comprises indication information, and the indication information indicates to establish group communication between the first terminal device and the second terminal device.

26. The system according to claim 24 or 25, wherein that the group management network element is configured to determine the first session management network element and the second session management network element in response to the group communication request message comprises:
the group management network element is configured to: obtain, based on the identification information of the first terminal device, a first context associated with the first session, and obtain, based on the identification information of the second terminal device, a second context associated with the second session, wherein the first context comprises identification information of the first session management network element, and the second context comprises the identification information of the second session management network element.

27. The system according to any one of claims 24 to 26, wherein
the first session management network element is further configured to send a first registration message to the group management network element, wherein the first registration message comprises the identification information of the first terminal device, the identification information of the first session management network element, and identification information of the first session;
the second session management network element is further configured to send a second registration message to the group management network element, wherein the second registration message comprises the identification information of the second terminal device, the identification information of the second session management network element, and identification information of the second session; and
the group management network element is further configured to: receive the first registration message from the first session management network element, and receive the second registration message from the second session management network element.

28. The system according to any one of claims 24 to 27, wherein that the group management network element is configured to receive a group communication request message comprises:
the group management network element is configured to receive the group communication request message from a network exposure function network element.

29. A group communication method, comprising:
receiving, by a first session management network element, a fifth notification message from a group management network element, wherein the fifth notification message comprises identification information of a first terminal device and identification information of a second terminal device, and the first session management network element serves a first session that has been established by the first terminal device; and
determining, by the first session management network element, whether the second terminal device is served by the first session management network element, and establishing group communication between the first terminal device and the second terminal device based on a determining result.

30. The method according to claim 29, wherein the establishing group communication between the first terminal device and the second terminal device based on a determining result comprises: when the first session management network element determines that the second terminal device is not served by the first session management network element, obtaining, by the first session management network element, identification information of a second session management network element based on the identification information of the second terminal device, wherein the second session management network element is a network element serving for a session of the second terminal device.

31. The method according to claim 29 or 30, wherein the method further comprises:
sending, by the first session management network element, a tunnel establishment request message to the second session management network element based on the identification information of the second session management network element, wherein the tunnel establishment request message comprises tunnel information of a first user plane network element, the identification information of the first terminal device, and the identification information of the second terminal device, and the first user plane network element serves the first session;
receiving, by the first session management network element, a tunnel establishment response message from the second session management network element, wherein the tunnel establishment response message comprises tunnel information of a second user plane network element, and the second user plane network element serves the second session; and
configuring, by the first session management network element, a first forwarding rule for the first user plane network element based on the tunnel information of the second user plane network element and the identification information of the second terminal device, wherein the first forwarding rule is used to send a data packet whose destination address points to the second terminal device to the second user plane network element.

32. The method according to any one of claims 29 to 31, wherein the establishing group communication between the first terminal device and the second terminal device based on a determining result comprises:
when the first session management network element determines that the second terminal device is served by the first session management network element, configuring, by the first session management network element, a second forwarding rule for the first user plane network element, wherein the second forwarding rule is used to locally exchange communication data between the first terminal device and the second terminal device, and the first user plane network element serves a session that has been established by the first terminal device and the second terminal device.

33. The method according to any one of claims 29 to 32, wherein the establishing group communication between the first terminal device and the second terminal device based on a determining result comprises:
when the first session management network element determines that the second terminal device is served by the first session management network element, establishing, by the first session management network element, a tunnel between the first user plane network element and the second user plane network element, wherein the first user plane network element serves a session that has been established by the first terminal device, and the second user plane network element serves a session that has been established by the second terminal device; and configuring, by the first session management network element, a third forwarding rule for the first user plane network element, and configuring a fourth forwarding rule for the second user plane network element, wherein the third forwarding rule is used to send a data packet whose destination address points to the second terminal device to the second user plane network element, and the fourth forwarding rule is used to send a data packet whose destination address points to the first terminal device to the first user plane network element.

34. A communication apparatus, wherein the apparatus comprises a module configured to perform the method according to any one of claims 11 to 17, a module configured to perform the method according to any one of claims 18 to 23, or a module configured to perform the method according to any one of claims 29 to 33.

35. A communication apparatus, comprising:
a processor, configured to execute a computer program stored in a memory, so that the apparatus performs the method according to any one of claims 11 to 17, the apparatus performs the method according to any one of claims 18 to 23, or the apparatus performs the method according to any one of claims 29 to 33.

36. A computer program product, wherein the computer program product comprises instructions used to perform the method according to any one of claims 11 to 17, the computer program product comprises instructions used to perform the method according to any one of claims 18 to 23, or the computer program product comprises instructions used to perform the method according to any one of claims 29 to 33.

37. A computer-readable storage medium, wherein the computer-readable storage medium stores a computer program, and when the computer program runs on a computer, the computer performs the method according to any one of claims 11 to 17, the computer performs the method according to any one of claims 18 to 23, or the computer performs the method according to any one of claims 29 to 33.
